(19) **Europäisches Patentamt / European Patent Office / Office européen des brevets**

(11) **EP 4 153 658 B1**

(12) **EUROPÄISCHE PATENTSCHRIFT**

(45) Veröffentlichungstag und Bekanntmachung des Hinweises auf die Patenterteilung:
**06.12.2023   Patentblatt 2023/49**

(21) Anmeldenummer: **20745138.6**

(22) Anmeldetag: **21.07.2020**

(51) Internationale Patentklassifikation (IPC):
**C08G 77/26** (2006.01)    **C07F 7/21** (2006.01)
**C08L 83/04** (2006.01)    **C08G 73/06** (2006.01)

(52) Gemeinsame Patentklassifikation (CPC):
**C08L 83/04; C08G 73/065; C08G 77/26; C08L 61/14**

(86) Internationale Anmeldenummer:
**PCT/EP2020/070520**

(87) Internationale Veröffentlichungsnummer:
**WO 2022/017581 (27.01.2022 Gazette 2022/04)**

(54) **VERNETZBARE ORGANOSILOXAN-MODIFIZIERTE REAKTIONSHARZE**

CROSS-LINKABLE ORGANOSILOXANE-MODIFIED REACTION RESINS

RÉSINES DE RÉACTION MODIFIÉES PAR ORGANOSILOXANE RÉTICULABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.03.2023   Patentblatt 2023/13**

(73) Patentinhaber: **Wacker Chemie AG**
**81737 München (DE)**

(72) Erfinder: **OSTENDORF, Detlev**
**01129 Dresden (DE)**

(74) Vertreter: **Mieskes, Klaus Theoderich et al**
**Wacker Chemie AG**
**Intellectual Property**
**Hanns-Seidel-Platz 4**
**81737 München (DE)**

(56) Entgegenhaltungen:
• **SHIXIN PEI, YUE HAN, YING GUO, JINSHUAI LIU, JIANGNAN DING, YINGCHUN LI, HENG ZHOU, TONG ZHAO: "Thermal and water absorption properties of cyanate ester resins modified by fluoride-containing and silicone-containing components", POLYM. ADV. TECHNOL., Bd. 31, 3. Februar 2020 (2020-02-03), Seiten 1245-1255, XP002802581, in der Anmeldung erwähnt**

**Beschreibung**

Die Erfindung betrifft vernetzbare, mit Organosiloxanen modifizierte, Reaktionsharze mit funktionellen Cyanatester-Gruppen, Verfahren zu deren Herstellung, sowie daraus erhältliche Vulkanisate und Komposite.

Epoxid (EP)-Harze bzw. Epoxidharzsysteme kommen in vielfältigen Anwendungen zum Einsatz und haben sich heutzutage in Verbundwerkstoffen, z.B. in Verbindung mit Glas-, Kohlenstoff- oder Aramidfaser, als eine der am Meisten verwendeten Duromerklasse etabliert. Daneben hat der Einsatz von weiteren organischen Harzsystemen wie Cyanatester (CE)-, Bismaleimid (BMI)-, Polyimid (PI)- Benzoxazin- oder Phtalonitril-Harzen bzw. Misch-Harzsystemen wie Bis(benzocyclobutenimid)-Bismaleimid, Cyanatester-Epoxid oder Bismaleimid-Triazin (BT-Harze) als Matrixharze in Faserverbundwerkstoffen, z.B. in Carbonfaser-verstärkten Kunststoffen (CFK), für den Einsatz in Industrie, Automobilbau sowie Luft- und Raumfahrt, in den vergangenen Jahren zunehmende Bedeutung erlangt. Im Vergleich zu Epoxidharzen weisen die z.B. auf CE-, BMI- oder PI-basierten, polymeren Matrixharze, unter anderem sehr gute mechanische Eigenschaften, thermische Belastbarkeit, Langzeitbeständigkeit sowie hohe Glasübergangstemperaturen auf, welche ihre Einsatzmöglichkeiten besonders im Hochtemperaturbereich stark erweitern. Diese so genannten Hochtemperatur-Duromere haben jedoch auch Nachteile, wie beispielsweise eine erhöhte Sprödigkeit aufgrund der hohen Vernetzungsdichten. Zudem zeigen die ausgehärteten Polymernetzwerke mitunter eine hohe Wasseraufnahmerate und damit einhergehend eine unzureichende hydrolytische Stabilität. Es wäre somit wünschenswert für diese bereits marktgängigen Harzsysteme geeignete Modifikatoren zur Reduzierung der Wasseraufnahme bereitzustellen, um deren hydrolytische Degradation zu minimieren, sodass die daraus erhältlichen Hochtemperatur-Duromere in anspruchsvollen Verbundwerkstoff-Anwendungen, vorzugsweise für die Luft- und Raumfahrtindustrie, kommerziell eingesetzt werden können.

Bei der Aushärtung von Cyanatesterharzen trimerisieren die reaktiven Cyanatester-Gruppen zu cyclischen Triazinringen, wodurch ein Netzwerk mit hoher Vernetzungsdichte entsteht. Die auf diese Weise erhältlichen Duromere weisen einerseits hohe mechanische Festigkeiten, andererseits aber auch eine hohe Sprödigkeit auf und werden durch Feuchtigkeit schnell zersetzt.

Der Einsatz von Siloxan-haltigen Komponenten zur Schlagzähmodifizierung und zur Verbesserung der thermischen sowie dielektrischen Eigenschaften der Cyanatester-Duromer-Netzwerke wurde bereits mehrfach in der Literatur beschrieben, jedoch ist über den Einfluss von Siloxanen auf die Wasseraufnahme bislang nur wenig bekannt.

In Polym. Adv. Technol. 2020, 31, 1245-1255 berichten die Autoren über die Wirkung von linearen Siliconen, die entweder endständige reaktive Silanol-Gruppen ($\equiv$Si-OH) oder Silan-Gruppen ($=$Si-H) aufweisen, u.a. auf die Wasseraufnahme von vulkanisiertem 2,2-Bis(4-cyanatophenyl)propan. Im Vergleich zu nicht modifiziertem, vernetztem 2,2-Bis(4-cyanatophenyl)propan (bezeichnet als CR-0) zeigte das Si-H-terminierte Silicon (bezeichnet als CR-3) einen geringen und das Si-OH-terminierte Silicon (bezeichnet als CR-2) einen signifikanten Einfluss auf die Wasseraufnahme.

In Polym. Int. 2011;60:1277-1286 wird weiterhin die Möglichkeit aufgezeigt durch Copolymerisation von 2,2-Bis(4-cyanatophenyl)propan mit Polyphenylsilsesquioxan sowohl die Schlagzähfestigkeit als auch das Biege-Elastizitätsmodul der ausgehärteten Mischungen im Vergleich zum nicht modifizierten Cyanatesterharz zu erhöhen. Die Polyphenylsilsesquioxan-Modifikatoren sind durch sauer katalysierte Hydrolyse und Kondensation von Phenyltrimethoxysilan zugänglich und enthalten einen hohen Gehalt an reaktiven Silicium-gebundenen Methoxy- und Silanol-Gruppen.

Die Verwendung von linearen Siliconen bzw. Polyphenylsilsesquioxan mit reaktiven Alkoxy- und/oder Silanol-Einheiten als Modifikatoren für Cyanatesterharze hat jedoch mehrere Nachteile: Zum einen können die Silanol-Gruppen während der Vernetzungsreaktion Wasser abspalten, das in unerwünschter Weise mit Cyanatester-Gruppen zu Amin und gasförmigem Kohlenstoffdioxid reagiert und Blasenbildung verursacht; zum anderen wirken sich die reaktiven Silanol-Gruppen wie auch die Silicium-gebundenen reaktiven Methoxy-gruppen nachteilig auf die thermo-oxidative Stabilität der Siloxane sowie auf das Triazin-Duromer-Netzwerk aus. Weiterhin sind die genannten Modifikatoren mit dem ausgehärteten Cyanatester-Duromer-Netzwerk wenig kompatibel, sodass nach der Aushärtung des Cyanatesters makroskopisch, d.h. augenscheinlich heterogene, trübe Vulkanisate entstehen, aus denen das Silicon ausschwitzt, was jedoch nicht erwünscht ist und sich nachteilig auf die Wasseraufnahme auswirkt.

Der vorliegenden Erfindung liegt die Aufgabe zugrunde, organische Harze mit reaktiven Cyanatgruppen so zu modifizieren, dass nach dem Formgebungs- und Härtungsprozess Duroplaste mit verringerter Wasseraufnahmerate und damit verbesserter Hydrolysebeständigkeit sowie gegebenenfalls verbesserter Risszähigkeit und gegebenenfalls verbesserten dielektrischen Eigenschaften erhalten werden, wobei die den Duroplasten eigenen vorteilhaften Eigenschaften, wie Wärmeformbeständigkeit, mechanische Festigkeit, thermo-oxidative Beständigkeit und Chemikalienbeständigkeit, auch bei den derart modifizierten Duroplasten weitgehend erhalten bleiben.

Diese Aufgabe wird erfindungsgemäß dadurch gelöst, dass cyclische Phenylgruppen-haltige Siloxane verwendet werden, die in organischen Verbindungen mit reaktiven Cyanatester-Gruppen sehr gut mischbar sind und nach der Vulkanisation mit der vernetzten Cyanatester-Matrix homogene, transparente Duromere ergeben, welche keine Entmischung, d.h. Ausölen oder Ausschwitzen der Siloxankomponente an der Oberfläche, aufweisen. Im Vergleich zu den nicht modifizierten Cyanatesterharzen zeichnen sich die erfindungsgemäßen modifizierten Cyanatesterharze nach der Aushärtung zum Duromer durch eine verringerte Wasseraufnahme und damit eine höhere Beständigkeit gegen hydrolytische Zersetzung sowie durch eine hohe thermo-oxidative Stabilität, d.h. einen nur geringfügig höheren Masseverlust während der Lagerung bei hohen Temperaturen, aus.

Gegenstand der Erfindung sind vernetzbare Zusammensetzungen enthaltend

(A) mindestens eine organische, von Siloxaneinheiten freie Verbindung mit mindestens zwei reaktiven Cyanatester-Gruppen (= "N≡C-O-"),

(B) mindestens ein Cyclosiloxan der allgemeinen Formel (I)

$$[R_aR^1_bSiO_{2/2}]_m \qquad (I),$$

wobei

R gleich oder verschieden sein kann und einwertige, SiC-gebundene, gesättigte aliphatische Kohlenwasserstoffreste bedeutet,

$R^1$ gleich oder verschieden sein kann und einwertige, SiC-gebundene, gegebenenfalls mit Halogen- oder Phosphoratom substituierte, aromatische Kohlenwasserstoffreste bedeutet,

a 0, 1 oder 2, bevorzugt 0 oder 1, besonders bevorzugt 0, ist,

b 0, 1 oder 2, bevorzugt 1 oder 2, besonders bevorzugt 2, ist,

m gleich 3, 4 oder 5, bevorzugt 3 oder 4, besonders bevorzugt 4, ist,

mit der Maßgabe, dass

a+b gleich 2 ist und pro Siloxanmolekül (B) mindestens drei Reste $R^1$ anwesend sind.

Um die Seitenzahl der Beschreibung der vorliegenden Erfindung nicht zu umfangreich zu gestalten, werden nur die bevorzugten Ausführungsformen zu den einzelnen Merkmalen aufgeführt.

Der fachkundige Leser soll diese Art der Offenbarung aber explizit so verstehen, dass damit auch jede Kombination aus unterschiedlichen Bevorzugungsstufen explizit offenbart und explizit gewünscht ist - also jede Kombination sowohl innerhalb einer einzigen Verbindung als auch zwischen unterschiedlichen Verbindungen.

## Verbindung (A)

Es handelt sich um eine organische, von Siloxaneinheiten freie Verbindung mit mindestens zwei reaktiven Cyanatester-Gruppen (= "N≡C-O-") pro Molekül. (A) kann substituiert sein sowie auch Heteroatome enthalten. Bevorzugt handelt es sich bei Komponente (A) um, gegebenenfalls substituierte, gegebenenfalls Heteroatome enthaltende, aromatische Kohlenwasserstoffverbindungen, wobei pro Molekül mindestens zwei an aromatische Kohlenstoffatome gebundene Cyanatester-Gruppen vorliegen. Besonders bevorzugt sind in Komponente (A) pro Molekül mindestens zwei, gegebenenfalls substituierte, gegebenenfalls Heteroatome enthaltende, aromatische Kohlenwasserstoffreste mit jeweils einer an ein aromatisches Kohlenstoffatom gebundenen Cyanatester-Gruppe vorhanden, insbesondere sind in Komponente (A) die, gegebenenfalls substituierten, gegebenenfalls Heteroatome enthaltenden, aromatischen Kohlenwasserstoffreste mit jeweils einer an ein aromatisches Kohlenstoffatom gebundenen Cyanatester-Gruppe unabhängig voneinander über eine kovalente Bindung oder eine verbrückende Einheit, welche mindestens eine funktionelle Gruppe ausgewählt aus -$CR^2_2$-, -O-, -S-, -N=N-, -CH=N-, -CO- , -C(O)O-, -SO-, -$SO_2$-, OP(O-)$_3$; einer zweiwertigen aromatischen Gruppe, wie Phenylen, Biphenylen und Naphthylen; oder Cycloalkylengruppen, wie Tricyclo[5.2.1.0$^{2,6}$]decandiyl und Bicyclo[2.2.1]heptandiyl enthält, miteinander verbunden.

Bei Rest $R^2$ handelt es sich jeweils unabhängig voneinander um Wasserstoffatom, Fluoratom oder einen, gegebenenfalls substituierten Kohlenwasserstoffrest mit 1 bis 30 Kohlenstoffatomen, welcher gegebenenfalls entweder mit einem Substituenten oder mit dem anderen Rest $R^2$ zu einer cyclischen Einheit verbunden sein kann.

Beispiele für gegebenenfalls substituierte Kohlenwasserstoffreste $R^2$ sind Methyl-, Ethyl-, Trifluormethyl-, Fluorenyl-, 1,1-Cyclohexandiyl-, 9H-Fluoren-9,9-diyl-, N-Phenylphtalimid-3,3-diyl-, 1(3H)-Isobenzofuranon-3,3-diyl-, Anthracen-9(10H)-on-10,10-diyl, Phenyl- und der 3,3,5-Trimethylcyclohexan-1,1-diylrest.

Beispiele für die erfindungsgemäß eingesetzte Komponente (A) sind Di- und Poly-Cyanatester von monoaromatischen Kohlenwasserstoffen, wie Phenylen-1,2-dicyanat, Phenylen-1,3-dicyanat (CAS 1129-88-0), Phenylen-1,4-dicyanat (CAS 1129-80-2), 2,4,5-Trifluorphenylen-1,3-dicyanat, 1,3,5-Tricyanatobenzol, Methyl(2,4-dicyanatophenyl)keton und 2,7-Dicyanatonaphtalen; Cyanatester von Bisphenolen, wie 2,2-Bis(4-cyanatophenyl)butan, 2,2-Bis(4-cyanatophenyl)propan (CAS 1156-51-0, Bisphenol A-Cyanatester), 2,2-Bis(4-cyanatophenyl)-1,1,1,3,3,3-hexafluoropropan (CAS 32728-27-1, Bisphenol AF-Cyanatester), 2,2-Bis(3-methyl-4-cyanatophenyl)propan (Bisphenol C-Cyanatester), 1,1-Bis(4-cyanatophenyl)ethan (CAS 47073-92-7, Bisphenol E-Cyanatester), 1,1-Bis(4-cyanatophenyl)-1-phenylethan (Bisphenol AP-Cyanatester), Bis(4-cyanatophenyl)methan (Bisphenol F-Cyanatester), Bis(4-cyanato-3,5-dimethylphenyl)methan (CAS 101657-77-6, Tetramethyl-Bisphenol F-Cyanatester), 1,3-Bis(2-(4-cyanatophenyl)propan-2-yl)benzol (CAS 127667-44-1, Bisphenol M-Cyanatester), Bis(4-cyanatophenyl)thioether), Bis(4-cyanatophenyl)ether, 9,9-Bis(4-cyanatophenyl)fluoren (Bisphenol FL-Cyanatester), Bis(4-cyanatophenyl)sulfon (Bisphenol S-Cyanatester), Bis(4-cyanatophenyl)keton, Bis(4-(4-cyanatophenoxy)phenyl)keton, Bis(4-(4-cyanatophenoxy)phenyl)sulfon, Bis(4-(4-cyanatophenoxy)phenyl)(phenyl)phosphinoxid, Bis(4-cyanatophenyl)(methyl)phosphinoxid, 1,1-Dibromo-2,2-bis(4-cyanatophenyl)ethylen, 1,1-Dichloro-2,2-bis(4-cyanatophenyl)ethylen (CAS 14868-03-2), 3,3-Bis(4-cyanatophenyl)-N-phenylphtalimid, 3,3-Bis(4-cyanatophenyl)-1(3H)-isobenzofuranon, 3,3-Bis(4-cyanatophenyl)-2-benzofuran-1-on, 10,10-bis(4-cyanatophenyl)anthracen-9(10H)-on, 1-Ethyl-2-methyl-3-(4-cyanatophenyl)-5-cyanatoindan, 1,1-Dimethyl-3-methyl-3-(4-cyanatophenyl)cyanatoindan, Bis(2-cyanato-3-methoxy-5-methylphenyl)methan und 1,1-Bis(3-methyl-4-cyanatophenyl)cyclohexan (Bisphenol Z-Cyanatester); Cyanatester von Propenyl-substituierten Bisphenolen, wie Bis(4-(4-(2-(3-(2-propenyl)-4-cyanatophenyl)propan-2-yl)phenoxy)phenyl)sulfon, 2,2-Bis(3-(2-propenyl)-4-cyanatophenyl)propan, 2,2-Bis(3-(1-propenyl)-4-cyanatophenyl)propan, 2,2-Bis(3-(2-propenyl)-4-cyanatophenyl)propan und Bis(4-(4-cyanato-3-(2-propenyl)phenoxy)phenyl)sulfon; Cyanatester des Biphenyls, wie 4,4'-Dicyanatobiphenyl (CAS 1219-14-3), 2,4'-Dicyanatobiphenyl und 2,2'-Dicyanatobiphenyl; Phenol-Dicyclopentadien-Cyanatesterharze, wie CAS 135507-71-0 (Handelsbezeichnung: AroCy® XU-71787); Cyanatester von Phenol-, Naphthol-, Naphtalendiol- oder Cresol-Formaldehyd-Kondensationsprodukten, wie Cresol-Novolak-Cyanatester oder Phenol-Novolak-Cyanatester, wie z.B. CAS 87397-54-4, CAS 153191-90-3, CAS 268734-03-8, CAS 30944-92-4 und CAS 173452-35-2 (Beispiele für Handelsbezeichnungen sind Primaset® PT-15, PT-30, PT-60, PT-90 und CT-90; sowie AroCy® XU-371); 1,1,1-Tris(4-cyanatophenyl)ethan (CAS 113151-22-7); 1,6-Dicyanatoperfluorhexan; Cyanatester von Polyphenolen; Homopolymere oder Copolymere Cyanatester-Harze, wie Bisphenol A-Dicyanat-Homopolymer (CAS 25722-66-1); Cyanatester von Silanen mit phenolischen Resten, wie Dimethylbis(4-cyanatophenyl)silan; sowie endterminierte Cyanatester-Polymerharze (A1), welche sich aus mindestens zwei gleichen oder unterschiedlichen Wiederholungseinheiten zusammensetzen, wobei das Rückgrat jeder Wiederholungseinheit mindestens eine zweiwertige aromatische Gruppe, wie Phenylen, Biphenylen und Naphthylen; oder 9H-Fluoren-9,9-diyl, enthält sowie mindestens eine funktionelle Gruppe ausgewählt aus -O-, -S-, -SO-, -SO$_2$-, -CO-, -C(O)O-, -CH$_2$-, -CF$_2$-, -CHF-, -C(CF3)$_2$-, -C(CH$_3$)$_2$-, - CH(CH$_3$)-, -N=N-, -CH=N-, OP(O-)$_3$; oder Cycloalkylengruppen, wie tricyclo[5.2.1.0$^{2,6}$]decandiyl und Bicyclo[2.2.1]heptandiyl. Beispiele für Wiederholungseinheiten in (A1) sind Arylenether, Arylenethersulfone, oder Arylenetherketone. Es können auch Mischungen von unterschiedlichen Komponenten (A) bzw. (A1) eingesetzt werden.

Bevorzugt handelt es sich bei Komponente (A) um 2,2-Bis(4-cyanatophenyl)propan, 1,1-Bis(4-cyanatophenyl)ethan, Bis(4-cyanatophenyl)methan, 1,3-Bis(2-(4-cyanatophenyl)propan-2-yl)benzol, 2,2-Bis(3-(2-propenyl)-4-cyanatophenyl)propan, Bis(4-cyanatophenyl)thioether, Bis(4-cyanatophenyl)sulfon, Phenol-Dicyclopentadien-Cyanatesterharze sowie Cyanatester von Phenol- oder Cresol-Formaldehyd-Kondensationsprodukten. Besonders bevorzugt handelt es sich bei Komponente (A) um 2,2-Bis(4-cyanatophenyl)propan, Bis(4-cyanatophenyl)methan, 1,1-Bis(4-cyanatophenyl)ethan, 1,3-Bis(2-(4-cyanatophenyl)propan-2-yl)benzol, Bis(4-cyanatophenyl)thioether, Bis(4-cyanatophenyl)sulfon, Phenol-Dicyclopentadien-Cyanatesterharze sowie Cyanatester von Phenol- oder Cresol-Formaldehyd-Kondensationsprodukten.

Es kann nur eine Komponente (A) oder eine Mischung unterschiedlicher Komponenten (A) eingesetzt werden.

Bevorzugt bilden Komponenten (A) und (B) nach dem Aushärten makroskopisch homogen transparente Duromere, welche keine Entmischung, d.h. Ausölen oder Ausschwitzen der Siloxankomponente an der Oberfläche, aufweisen.

**Verbindung (B)**

(B) ist ein Cyclosiloxan der allgemeinen Formel (I) wie weiter oben beschrieben. Cyclosiloxan (B) kann bei 23°C und 1013 hPa fest oder flüssig sein, wobei die feste Form bevorzugt ist.

Vorzugsweise weist Cyclosiloxan (B) einen Schmelzpunkt höher als 30°C, bevorzugt höher als 80°C, besonders bevorzugt höher als 130°C, insbesondere höher als 150°C, ganz besonders bevorzugt höher als 180°C, jeweils bei 1013 hPa, auf.

Beispiele für einwertige, SiC-gebundene, gesättigte aliphatische Kohlenwasserstoffreste R sind Alkylreste, wie der Methyl-, Ethyl-, n-Propyl-, iso-Propyl-, 1-n-Butyl-, 2-n-Butyl- , iso-Butyl-, tert-Butyl-, n-Pentyl-, iso-Pentyl-, neo-Pentyl-, tert-Pentylrest, n-Hexyl-, n-Heptyl-, n-Octyl-, 2,4,4-Trimethylpentyl-, 2,2,4-Trimethylpentyl-, 2-Ethylhexyl-, n-Nonyl-, n-Decyl-, n-Dodecyl-, n-Hexadecyl-, n-Octadecylrest; Cycloalkylreste, wie der Cyclopentyl-, Cyclohexyl-, Cycloheptyl- und Methylcyclohexylrest.

Bevorzugt handelt es sich bei Rest R um einwertige, SiC-gebundene Kohlenwasserstoffreste mit 1 bis 8 Kohlenstoffatomen, besonders bevorzugt um den Methylrest.

Beispiele für einwertige, SiC-gebundene aromatische, gegebenenfalls substituierte Kohlenwasserstoffreste R$^1$ sind Arylreste, wie der Phenyl-, Biphenyl-, Naphthyl-, Anthryl- und Phenanthrylrest; Alkarylreste, wie o-, m-, p-Tolylreste; Xylylreste und Ethylphenylreste; Aralkylreste, wie der Benzylrest, (9,10-Dihydro-9-oxa-10-phosphaphenanthren-10-oxid-10-yl)ethyl-, der $\alpha$- und der $\beta$-Phenylethylrest; Halogenarylreste, wie der Fluorphenyl-, Chlorphenyl- und der Bromphenylrest.

Bevorzugt handelt es sich bei Rest R[1] um Halogen- und Phosphoratom-freie aromatische Kohlenwasserstoffreste, besonders bevorzugt um den Phenylrest.

Bevorzugt handelt es sich bei Komponente (B) um Cyclosiloxane der Formel (I) mit m gleich 3 oder 4, a gleich 1 und b gleich 1. Besonders bevorzugt handelt es sich bei Komponente (B) um Cyclosiloxane der Formel (I) mit m gleich 3 oder 4, wobei in mindestens einer der m Einheiten a gleich 0 und b gleich 2 ist.

Insbesondere handelt es sich bei Komponente (B) um Cyclosiloxane der Formel (I) mit m gleich 4, a gleich 0 und b gleich 2.

Beispiele für die erfindungsgemäß eingesetzten Cyclosiloxane (B) sind Octaphenylcyclotetrasiloxan (CAS 546-56-5), Hexaphenylcyclotrisiloxan (CAS 512-63-0), 2,4,6,8-Tetramethyl-2,4,6,8-tetraphenylcyclotetrasiloxan (CAS 77-63-4), 2,4,6-Trimethyl-2,4,6-triphenylcyclotrisiloxan (CAS 546-45-2), 1,1,3,3,5,5-Hexaphenyl-7,7-dimethylcyclotetrasiloxan (CAS 1693-46-5) und 1,1,3,3-Tetramethyl-5,5,7,7-tetraphenylcyclotetrasiloxan (CAS 1693-47-6), wobei Octaphenylcyclotetrasiloxan und Hexaphenylcyclotrisiloxan besonders bevorzugt sind.

Es kann nur eine Komponente (B) oder eine Mischung unterschiedlicher Komponenten (B) eingesetzt werden.

Die erfindungsgemäßen Zusammensetzungen enthalten Cyclosiloxan (B) in Mengen von bevorzugt 1 bis 100 Gewichtsteilen, besonders bevorzugt 5 bis 50 Gewichtsteile, insbesondere 5 bis 25 Gewichtsteilen, jeweils bezogen auf 100 Gewichtsteile der Komponente (A).

Zusätzlich zu den Komponenten (A) und (B) können die erfindungsgemäßen Zusammensetzungen weitere Stoffe enthalten, die unterschiedlich zu Komponenten (A) und (B) sind, wie z.B. Modifikator (C), Reaktivharz (D), Füllstoff (E), Beschleuniger (F), Lösungsmittel (G) sowie weitere Bestandteile (H).

**Verbindung (C)**

Bei den Modifikatoren (C) handelt es sich um Organopolysiloxane (C1), enthaltend Einheiten der Formel (II)

$$R^3{}_m(OR^4)_n SiO_{(4-m-n)/2} \qquad (II),$$

worin

R[3] gleich oder verschieden sein kann und Wasserstoffatom oder einwertige oder zweiwertige, SiC-gebundene, gegebenenfalls substituierte auch bspw. mit Heteroatomen, Kohlenwasserstoffreste bedeutet,

R[4] gleich oder verschieden sein kann und Wasserstoffatom oder einwertige, gegebenenfalls substituierte Kohlenwasserstoffreste mit 1 bis 18 Kohlenstoffatomen bedeutet,

m 0, 1, 2 oder 3, bevorzugt 1, 2 oder 3, ist,

n 0, 1, 2 oder 3, bevorzugt 0, 1 oder 2, besonders bevorzugt 0 oder 1, insbesondere 0, ist und

mit der Maßgabe, dass in Formel (II) die Summe $m+n \leq 3$ beträgt, in höchstens 20%, bevorzugt höchstens 15%, besonders bevorzugt höchstens 10%, insbesondere höchstens 5% der Einheiten der Formel (II) m=0 ist; in höchstens 1,0%, bevorzugt höchstens 0,5%, besonders bevorzugt höchstens 0,3%, insbesondere höchstens 0,2% der Einheiten der Formel (II) R[4] gleich Wasserstoffatom ist, jeweils bezogen auf alle Siloxaneinheiten der Formel (II) in Organopolysiloxan (C1); und dass cyclische Siloxane der Formel (II) mit m=2 und n=0 mindestens eine Einheit der Formel (II) mit R[3] gleich einen reaktiven, von Halogen- und Phosphoratomfreien, funktionellen Rest enthalten.

Beispiele für einwertige oder zweiwertige, SiC-gebundene, gegebenenfalls substituierte Kohlenwasserstoffreste R[3] sind der Phenylen- und Biphenylenrest, die für R und R[1] genannten Reste; reaktive funktionelle Reste, wie einwertige Kohlenwasserstoffreste mit aliphatischen Kohlenstoff-Kohlenstoff-Mehrfachbindungen, wie Vinyl-, 1-Propenyl-, 2-Propenyl-, Vinylcyclohexyl-, Norbornenyl-, Norbornenylethyl-, Bicyclo[2.2.1]hept-5-en-2-yl, Dicyclopentenyl-, Cyclohexenyl-, 4-Vinylphenyl-, Styryl-, Arylethinyl-, Ethinylphenyl-, 1-Propenylphenyl- und 2-Propenylphenylrest; Imidoreste, wie N-(5-Ethinylphtalimido)phenyl-, N-(5-(Phenylethinyl)phtalimido)phenyl-, Nadimidophenyl-, Maleimidophenyl- und 3-Maleimidopropylrest; Epoxidreste, wie 3-Glycidoxypropyl-, 4-(Oxiran-2-yl)phenyl-, Oxiran-2-yl- und 2-(3,4-Epoxycyclohexyl)ethylrest; Acrylat- und Methacrylatreste, wie 3-Methacryloxypropyl-, Acryloxymethyl- und Methacryloxymethylrest; Aminreste, wie Aminophenyl-, 3-Aminopropyl-, N-(2-Aminoethyl)-3-aminopropyl- und N-Phenylaminomethylrest; Hydroxyalkyl- und Hydroxyarylreste, wie Hydroxypropyl- und Hydroxyphenylrest; sowie Bicyclo[4.2.0]octa-1,3,5-trienyl- (Benzocyclobutenyl-), Cyanatophenyl-, Isocyanatophenyl- und 3-Isocyanatopropylrest.

Bevorzugt handelt es sich bei Rest R[3] um Wasserstoffatom oder den Phenylen-, Phenyl-, Methyl-, Hydroxyphenyl-, Maleimidophenyl-, Cyanatophenyl- und Aminophenylrest, besonders bevorzugt um den Methyl-, Phenyl- und Hydroxyphenylrest.

Bevorzugt handelt es sich bei Rest R[4] um den Methyl-, Ethyl-, n-Propyl-, iso-Propyl-, n-Butyl-, sec-Butyl-, tert-Butyl- oder iso-Butylrest, besonders bevorzugt um den Methyl- oder Ethylrest.

Beispiele für Organopolysiloxane (C1) sind 1,3,5,7-Tetrakis(2-(3,4-epoxycyclohexyl)ethyl)-1,3,5,7-tetramethylcyclotetrasiloxan (CAS 121225-98-7), Bis[2-(3,4-epoxycyclohex-1-yl)ethyl]-1,1,3,3-tetramethyldisiloxan (CAS 18724-32-8), 1,3-Bis(norbornenylethyl)-1,1,3,3,-tetramethyldisiloxan, 2,4,6,8-Tetramethyl-2,4,6,8-tetrakis[3-(glycidoxy)propyl]cyclotetrasiloxan (CAS 257284-60-9), ein Organopolysiloxan der mittleren Zusammensetzung $(PhSiO_{3/2})_{20}(PhSi(OMe)O_{2/2})_{66}(PhSi(OMe)_2O_{1/2})_{14}$ und einer gewichtsmittleren Molmasse Mw = 2190 g/mol, Octa(epoxycyclohexyl)-POSS (CAS 187333-74-0), Octaphenyl-POSS (CAS 5256-79-1) und 1,1,3,5,5-Pentaphenyl-1,2,3-trimethyltrisiloxan (CAS 3390-61-2).

Bei den Modifikatoren (C) handelt es sich weiterhin um Cyanatester-Gruppen freie, thermoplastische organische Polymere (C2). Die Thermoplasten (C2) weisen entweder reaktive oder chemisch inerte Endgruppen auf. Reaktive Endgruppen verbleiben z.B. herstellungsbedingt bei der Polymerisationsreaktion aus den entsprechenden reaktiven Gruppen der Monomere. Dabei handelt es sich bevorzugt um Hydroxy-, Amino-, Carboxy- und Isocyanatogruppen. Beispiele für chemisch inerte Endgruppen sind Methyl- oder Phenylgruppen. Die Thermoplasten (C2) haben Glasübergangstemperaturen oberhalb von 100°C, bevorzugt von 130°C bis 450°C, besonders bevorzugt von 150°C bis 400°C, insbesondere von 180°C bis 350°C; die zahlenmittlere Molmasse Mn von (C2) beträgt vorzugsweise von 1.000 bis 100.000 g/mol, bevorzugt von 2.000 bis 50.000 g/mol, besonders bevorzugt von 2.000 bis 30.000 g/mol, insbesondere von 3.000 bis 20.000 g/mol. Beispiele für (C2) sind Polyarylene, Polyarylenether, Polyarylensulfide, Polysulfone, Polyethersulfone, Polyetherketone, Polyetheretherketone, Polyetherketonketone, Polyetheretherketonketone, Polyimide, Polybenzimidazole, Polyamide, Poly(amidimide), Polyarylate, Polyesterimide, Polyetherimide, Polyaramide, Polyacrylate, Polyhydantoine, Flüssigkristallpolymere, Polycarbonate, Polyestercarbonate und Polyethylenterephthalate; sowie deren Mischungen oder copolymere Verbindungen.

Bei den Modifikatoren (C) kann es sich weiterhin um monofunktionelle Cyanatester (C3) der allgemeinen Formel (III) handeln

$$R^4\text{-OCN} \qquad (III),$$

worin $R^4$ ein einwertiger, gegebenenfalls substituierter (bspw. auch mit Heteroatomen), aromatischer Kohlenwasserstoffrest bedeutet mit der Maßgabe, dass die Cyanatester-Gruppe direkt an ein aromatisches Kohlenstoffatom gebundenen ist. Beispiele für geeignete Komponenten (C3) sind Cyanatobenzol (CAS 1122-85-6), 1-Cyanato-4-cumylbenzol (CAS 110215-65-1), 1-Cyanato-4-tert-butylbenzol, 1-Cyanato-2-tert-butylbenzol, 4-Cyanatobiphenyl, 1-Cyanatonaphtalin, 2-Cyanatonaphtalin, 4-Cyanatononylbenzol, 4-Chlor-cyanatobenzol, 4-Cyanatodiphenylsulfon, 4-Cyanatotoluol, 4-Cyanatodiphenylether, 4-Cyanatodiphenylketon, 4-(Cyanato)methoxybenzol; sowie Propenyl-substituierte monofunktionelle Cyanatester, wie 2-(2-Propenyl)cyanatobenzol. Bevorzugt weisen die Modifikatoren (C3) einen Siedepunkt bei 1013 hPa von mindestens 150°C, besonders bevorzugt mindestens 180°C, insbesondere mindestens 220°C auf.

Zu den Modifikatoren (C) zählen weiterhin monomere Hydroxy- und gegebenenfalls Propenyl-funktionalisierte, organische Verbindungen (C4), welche keine weiteren zur Polymerisationsreaktion geeigneten reaktiven funktionellen Gruppen enthalten.

Bevorzugt sind in Modifikator (C4) die Hydroxy- und die gegebenenfalls vorhandenen Propenyl-Gruppen direkt an aromatische Kohlenstoffatome gebunden.

Beispiele für Modifikator (C4) ohne Propenyl-Gruppen sind Tricyclodecandimethanol (CAS 26896-48-0), einwertige, gegebenenfalls substituierte Phenole, wie Phenol, Kresol, Naphthol, Thymol, 4-Cumylphenol, 4-Benzylphenol, 4-Isopropylphenol, 2,4-Bis(α,α-dimethylbenzyl)phenol, 2,4-Di-tert-butylphenol, Nonylphenol, Xylenol, oder 2,6-Dinonylphenol; mehrwertige, gegebenenfalls substituierte Phenole, wie Dihydroxybenzol, Trihydroxybenzol und Dihydroxynaphthalin; aromatische Verbindungen mit zwei (Bisphenole) oder mehr Hydroxyphenyl-Gruppen, wie Bis-(2-hydroxyphenyl)-methan, 2,2-Bis(3-methyl-4-hydroxyphenyl)propan (Bisphenol C), 1,1-Bis(4-hydroxyphenyl)ethan (Bisphenol E), 2,2-Bis(4-hydroxyphenyl)propan (Bisphenol A), 2,2-Bis(4-hydroxyphenyl)hexafluorpropan (Bisphenol AF), 9,9-Bis(4-hydroxyphenyl)fluoren (Bisphenol FL), Bis(4-hydroxyphenyl)sulfon (Bisphenol S), 1,3-Bis(2-(4-hydroxyphenyl)-2-propyl)benzol (Bisphenol M), Bis(4-hydroxyphenyl)methan (Bisphenol F), Bis(4-hydroxyphenyl)ether, Bis(4-hydroxyphenyl)thioether und 1,1,1-Tris(4-hydroxyphenyl)ethan.

Beispiele für Modifikator (C4) mit Propenyl-Gruppen sind 2,2-Bis(3-(2-propenyl)-4-hydroxyphenyl)propan (CAS 1745-89-7), 2-(2-Propenyl)phenol (CAS 1745-81-9), 5,5'-Bis(2-propenyl)-2,2'-biphenyldiol (CAS 528-43-8), 3',5-Bis(2-propenyl)-2,4'-biphenyldiol (CAS 35354-74-6), α,α'-Bis(3-(2-propenyl)-4-hydroxyphenyl)-p-diisopropylbenzol, 2,2'-Bis(3-(2-propenyl)-4-hydroxyphenyl)perfluorpropan, 9,9'-Bis(3-(2-propenyl)-4-hydroxyphenyl)fluoren, α,α'-Bis(3-(1-propenyl)-4-hydroxyphenyl)-p-diisopropylbenzol, 2,2'-Bis(3-(1-propenyl)-4-hydroxyphenyl)perfluorpropan, 9,9'-Bis(3-(1-propenyl)-4-hydroxyphenyl)fluoren und Bis(3-(2-propenyl)-4-hydroxyphenyl)sulfon (CAS 41481-66-7).

Falls die erfindungsgemäßen Zusammensetzungen Modifikator (C) enthalten kann entweder nur ein Modifikator (C) oder es können mehrere unterschiedliche Modifikatoren (C) eingesetzt werden.

Falls die erfindungsgemäßen Zusammensetzungen Modifikator (C1), (C2) und (C3) enthalten, werden Mengen von bevorzugt 1 bis 40 Gewichtsteilen, besonders bevorzugt 1 bis 30 Gewichtsteilen, insbesondere 1 bis 20 Gewichtsteilen, eingesetzt, jeweils bezogen auf 100 Gewichtsteile der Mischung aus Komponenten (A) und (B).

Falls die erfindungsgemäßen Zusammensetzungen Modifikator (C4) enthalten, liegt das Molverhältnis von der Summe der in der erfindungsgemäßen Zusammensetzung vorhandenen Cyanatester-Gruppen zu der Summe der reaktiven funktionellen HydroxidGruppen in Komponente (C4) bevorzugt im Bereich von 60:40 bis 99:1, besonders bevorzugt von 70:30 bis 95:5.

**Verbindung (D)**

Reaktivharze (D) sind von Cyanatester-Gruppen sowie SiloxanEinheiten freie organische Verbindungen ausgewählt aus der Gruppe, bestehend aus Epoxiden (D1) und Imiden (D2) mit der Maßgabe, dass

Imide (D2) pro Molekül mindestens zwei, bevorzugt mindestens zwei an, gegebenenfalls Heteroatome enthaltende, aromatische Kohlenstoffatome gebundene, gegebenenfalls substituierte, polymerisierbare 5-Ethinylphtalimido-, 5-(Phenylethinyl)phtalimido-, Nadimido-, Benzocyclobutenphtalimido- oder Maleimido-Gruppen aufweisen, und Epoxide (D1) pro Molekül mindestens zwei, bevorzugt mindestens zwei an, gegebenenfalls Heteroatome enthaltende, aromatische Kohlenstoffatome gebundene, gegebenenfalls substituierte Glycidyloxy-, Glycidyloxycarbonyl-, Glycidylamino-, Diglycidylamino- oder Oxiranyl-Gruppen, aufweisen; wobei die Maleimido-, Glycidyloxy-, Glycidylamino-, Diglycidylamino-Gruppen besonders bevorzugt sind.

Bevorzugt enthalten die polymerisierbaren Reaktivharze (D) pro Molekül mindestens zwei, gegebenenfalls substituierte bspw. auch mit Heteroatomen, aromatische Kohlenwasserstoffreste mit jeweils einer an ein aromatisches Kohlenstoffatom gebundenen Maleimido-, Glycidyloxy-, Glycidyloxycarbonyl-, Glycidylamino-, Diglycidylamino-Gruppe. Besonders bevorzugt handelt es sich bei (D) um Verbindungen mit mindestens zwei, gegebenenfalls substituierten bspw. auch mit Heteroatomen, aromatischen Kohlenwasserstoffresten mit jeweils einer an ein aromatisches Kohlenstoffatom gebundenen Maleimido-, Glycidyloxy-, Glycidylamino-, Diglycidylamino-Gruppe, wobei die, gegebenenfalls substituierten bspw. auch mit Heteroatomen, aromatischen Kohlenwasserstoffreste über eine kovalente Bindung oder eine verbrückende Einheit, welche mindestens eine funktionelle Gruppe ausgewählt aus -CR$_5$-, -O-, -S-, -N=N-, -CH=N-, -CO-, -C(O)O-, -S(O)$_2$-, OP(O-)$_3$, Phenylen, Arylen, Biphenylen, Biarylen, Naphthylen oder Cycloalkylengruppen, wie Tricyclo[5.2.1.0$^{2,6}$]decandiyl oder Bicyclo[2.2.1]heptandiyl, enthält, miteinander verbunden sind.

Bei Rest R$^5$ handelt es sich jeweils unabhängig voneinander um Wasserstoffatom, Fluoratom oder einen, gegebenenfalls substituierten Kohlenwasserstoffrest mit 1 bis 30 Kohlenstoffatomen, welcher gegebenenfalls entweder mit einem Substituenten oder mit dem anderen Rest R$^5$ zu einer cyclischen Einheit verbunden sein kann.

Bevorzugt weist Verbindung (D) keine Heteroatome-enthaltenden aromatischen Kohlenwasserstoffreste auf.

Bevorzugt sind Epoxidharze (D1) mit Komponente (A) copolymerisierbar.

Bevorzugt sind Imidharze (D2) mit Komponente (A) nicht copolymerisierbar.

Beispiele für Epoxidharze (D1) sind Glycidylether von Phenolverbindungen, wie 2,2-Bis(4-glycidyloxyphenyl)propan (CAS 1675-54-3), Bis(4-glycidyloxyphenyl)methan (CAS 2095-03-6), 1,2-Bis(glycidyloxy)benzol (CAS 2851-82-3), 1,3-Bis(glycidyloxy)benzol (CAS 101-90-6), 1,4-Bis(glycidyloxy)benzol (CAS 129375-41-3), 3,5,3',5'-Tetramethyl-4,4'-diglycidyloxybiphenyl (CAS 85954-11-6), 2,2-Bis(3,5-dibromo-4-glycidyloxyphenyl)propan (CAS 3072-84-2), Tris(4-glycidyloxyphenyl)methan (CAS 66072-38-6), 1,1,2,2-Tetrakis(4-glycidyloxyphenyl)ethan (CAS 7328-97-4), 4,4'-Bis(glycidyloxyphenyl)sulfon (CAS 878-43-1), 9,9-Bis(4-glycidyloxyphenyl)fluoren (CAS 47758-37-2), 1,6-(Diglycidyloxy)naphthalen (CAS 27610-48-6); Glycidylether von Phenol-, Naphthol-, Naphtalendiol-, Bisphenol- oder Cresol-Formaldehyd-Kondensationsprodukten, wie Cresol-Novolak-Glycidylether (CAS 29690-82-2), Phenol-Novolak-Glycidylether (CAS 9003-36-5, CAS 28064-14-4, CAS 158163-01-0) und Bisphenol A-Epichlorhydrin-Formaldehyd-Copolymer (CAS 28906-96-9); Glycidylether von Phenol- oder Cresol-Dicyclopentadien-Kondensationsprodukten, wie CAS 68610-51-5 und CAS 119345-05-0; Glycidylester von aromatischen Carbonsäuren, wie Diglycidylphthalat (CAS 7195-45-1), Diglycidylterephthalat (CAS 7195-44-0), Diglycidylisophthalat (CAS 7195-43-9), Triglycidyl-1,2,3-benzoltricarboxylat, Triglycidyl-1,2,4-benzoltricarboxylat (CAS 7237-83-4) und Triglycidyl-1,3,5-benzoltricarboxylat (CAS 7176-19-4); Glycidylderivate von aromatischen Aminen und Aminophenolen, wie N,N-Diglycidyl-4-glycidyloxyanilin (CAS 5026-74-4), 4,4'-Methylenbis(N,N-diglycidylanilin) (CAS 28768-32-3), N,N,N',N'-Tetraglycidyl-4,4'-diamino-3,3'-diethyldiphenylmethan (CAS 130728-76-6) und m-(Glycidyloxy)-N,N-diglycidylanilin (CAS 71604-74-5); Glycidyl-endterminierte thermoplastische Polymere, welche beispielsweise durch Reaktion von Amino- oder Hydroxy-terminierten Thermoplasten (C2) mit Epichlorhydrin hergestellt werden können, wie Glycidyloxy- oder Digylcidylamino-endterminierte Polysulfone; Homopolymere oder Copolymere Epoxidharze, wie Bisphenol A-Epichlorhydrin-Copolymer (CAS 25036-25-3), 2,2',6,6'-Tetrabrombisphenol A-Epichlorhydrin-Copolymer (CAS 40039-93-8) und Reaktionsprodukte von Diglycidylbisphenol A mit m-Phenylenbis(methylamin) (CAS 110839-13-9); sowie Mischungen verschiedener Epoxidharze (D1).

Beispiele für polymerisierbare Maleimidharze (D2) sind N-(4-hydroxyphenyl)maleimid (CAS 7300-91-6), 4,4'-Bis(maleimidophenyl)methan (CAS 13676-54-5), Bis(4-maleimido-3-methylphenyl)methan, Bis(4-maleimido-3,5-dimethylphenyl)methan, 1,1-Bis(4-maleimidophenyl)cyclohexan, 2,4-Bismaleimidotoluol (CAS 6422-83-9), N,N'-1,2-Phenylenbismaleimid (CAS 13118-04-2), N,N'-1,3-Phenylenbismaleimid (CAS 3006-93-7), N,N'-1,3-Phenylenbismaleimid (CAS 3278-31-7), Copolymere von Bismaleimiden und aromatischen Amin, wie 4,4'-Bis(maleimidophenyl)methan-/ 4,4'-Bis(aminophenyl)methan-Copolymer (CAS 26140-67-0); Bis(4-maleimidophenyl)ether, 2,2-Bis[4-(maleimidophenoxy)phenyl]propan (CAS 79922-55-7), Bis(4-maleimidophenyl)sulfon (CAS 13102-25-5), Bis(4-maleimidophenyl)keton, 1,1'-(benzol-1,3-diyldimethandiyl)bis(1H-pyrrol-2,5-dion) (CAS 13676-53-4), 4,4'-Bis(maleimido)-1,1'-biphenyl (CAS 3278-30-6), 4,4'-Bis(3-maleimidophenoxy)diphenylsulfon oder Maleimid-terminierte thermoplastische Polymere (D2), welche beispielsweise durch Reaktion von Amino-terminierten Thermoplasten (C2) mit Maleinsäureanhydrid hergestellt werden können, wie Maleimid-terminierte Polysulfonether; sowie Mischungen verschiedener Maleimidharze (D2).

Falls die erfindungsgemäßen Zusammensetzungen polymerisierbare Reaktivharze (D) enthalten, liegt das Molverhältnis von der Summe der in der erfindungsgemäßen Zusammensetzung vorhandenen Cyanatester-Gruppen zu der Summe der reaktiven funktionellen Epoxid- oder Imid-Gruppen in Komponente (D) bevorzugt im Bereich von 20:80 bis 99:1, besonders bevorzugt von 40:70 bis 95:5, insbesondere von 60:40 bis 90:10.

Falls die erfindungsgemäßen Zusammensetzungen polymerisierbare Imidharze (D2) enthalten, wird bevorzugt eine weitere Komponente hinzugefügt, welche sowohl mit Cyanatester-Gruppen als auch mit Imido-Gruppen, bevorzugt Maleimido-Gruppen, copolymerisierbar ist. Dabei kann es sich um Cyanatester (A), Modifikatoren (C3) oder Modifikatoren (C4) handeln, welche an aromatische Kohlenstoffatome gebundene Propenyl-Gruppen aufweisen.

Falls die erfindungsgemäßen Zusammensetzungen polymerisierbares Imidharz (D2) enthalten liegt das Molverhältnis von der Summe der Imidgruppen zu der Summe der Propenylgruppen aus (A), (C3) und (C4) in einem Bereich von bevorzugt 50:50 bis 95:5, besonders bevorzugt 60:40 bis 90:10, insbesondere 70:30 bis 80:20.

### Verbindung (E)

Bei den in den erfindungsgemäßen Zusammensetzungen eingesetzten Füllstoffen (E) kann es sich um beliebige, bisher bekannte Füllstoffe handeln.

Bei den erfindungsgemäß eingesetzten Füllstoffen (E) handelt es sich bevorzugt um solche, die sich bei 23°C und 1000 hPa weniger als 1 Gew.-% in Toluol lösen.

Beispiele für Füllstoffe (E) sind nicht verstärkende teilchenförmige Füllstoffe, also Füllstoffe mit einer BET-Oberfläche von vorzugsweise bis zu 50 $m^2$/g, beispielsweise aus Quarz, Glas, Cristobalit, Diatomeenerde; in Wasser unlösliche Silikate, wie Calciumsilikat, Calciummetasilikat, Magnesiumsilikat, Zirkoniumsilikat, Talkum, Glimmer, Feldspat, Kaolin, Zeolithe; Metalloxide, wie Aluminium-, Titan-, Eisen-, Bor- oder Zinkoxide bzw. deren Mischoxide; Bariumsulfat, Calciumcarbonat, Marmormehl, Gips, Siliciumnitrid, Siliciumcarbid, Bornitrid, Kunststoffpulver, wie Polyacrylnitril- oder Polyetherimidpulver; verstärkende Füllstoffe, also Füllstoffe mit einer BET-Oberfläche von mehr als 50 $m^2$/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, Magnesiumhydroxid, hohlkugelförmige Füllstoffe, wie Mikroballone aus Glas, Galskugeln, phenolische Thermokugeln oder keramische Mikrokugel, wie z.B. solche erhältlich unter der Handelsbezeichnung Zeeospheres™ bei der Fa. 3M Deutschland GmbH in D-Neuss; faserförmige Füllstoffe, wie Wollastonit, Montmorrilonit, Basalt, Bentonit sowie geschnittene und/oder gemahlene Fasern aus Glas (Glaskurzfasern) oder Mineralwolle; metallische Fasern, Fasern bestehend aus Metalloxiden, Glas, Keramik, Kohlenstoff oder Kunststoff; sowie Naturfaser aus Cellulose, Flachs, Hanf, Holz oder Sisal.

Zur Herstellung von Hochleistungs-Verbundwerkstoffen enthalten die erfindungsgemäßen Harzzusammensetzungen bevorzugt Faserverstärkung (E1) aus allen bisher bekannten faserbildenden Materialien, bevorzugt aus Polypropylen, Polyethylen, Polytetrafluorethylen, Polyester; metallischen Fasern aus Stahl; oxidische und nicht oxidische Keramik, wie Siliciumcarbid, Aluminiumoxid, Siliciumdioxid, Boroxid; Glas, Quarz, Kohlenstoff, Aramid, Asbest, Graphit, Acrylnitril, Poly(benzothiazol), Poly(benzimidazol), Poly(benzoxazol), Titandioxid, Bor und aromatische Polyamidfasern, wie Poly(p-phenylenterephthalamid). Die Fasern (E1) können in unterschiedlichen Formen eingesetzt werden, z.B. als kontinuierliche Seile mit jeweils 1000 bis 400000 Einzelfilamenten, Gewebe, Gelege, Gestricke, Geflechte, Matten, Vliesen, Whisker, geschnittene oder gemahlene Kurzfasern oder zufälliges Faserfilz. Die bevorzugten Fasern sind Kohlenstofffasern, aromatische Polyamidfasern, keramische und Glasfasern.

Die genannten Füllstoffe können gegebenenfalls oberflächenbehandelt, z.B. hydrophobiert sein, beispielsweise durch die Behandlung mit Organosilanen bzw. -siloxanen, Stearinsäure oder mit einem oder mehreren Modifikatoren (C). Bevorzugt sind die Füllstoffe (E) oberflächenbehandelt.

Die erfindungsgemäß eingesetzten Füllstoffe (E) können sowohl jeder einzeln als auch in beliebiger Mischung untereinander eingesetzt werden. Falls eine Mischung unterschiedlicher Füllstoffe (E) eingesetzt wird handelt es sich bevorzugt um Füllstoffe (E1).

Falls die erfindungsgemäße Zusammensetzung Füllstoffe (E) enthält, beträgt der Anteil der Komponente (E) bezogen auf den nicht ausgehärteten Verbundwerkstoff bevorzugt 5 bis 80 Gew.-%, besonders bevorzugt 10 bis 70 Gew.-%, insbesondere 15 bis 60 Gew.-%. Bevorzugt handelt es sich dabei um faserförmige Füllstoffe (E1).

Falls die erfindungsgemäße Zusammensetzung sowohl Faserverstärkung (E1) als auch nicht-faserförmige Füllstoffe (E) enthält, beträgt das Gewichtsverhältnis der Komponenten (E):(E1) bevorzugt höchstens 50%.

**Verbindung (F)**

Die erfindungsgemäße Zusammensetzung kann in Gegenwart eines Beschleunigers (F1) vernetzt werden, wie er aus dem Stand der Technik bekannt ist. Als Härtungsbeschleuniger (F1) eignen sich beispielsweise Säuren und Basen, wie Salzsäure, Phosphorsäure, aliphatische und aromatische Amine, wie Triethylamin, N,N-Dimethylanilin und Pyridin; Amidine, Guanidine, Natriumhydroxid, Phosphine; Halogenide, wie Aluminiumchlorid, Lithiumchlorid, Borfluorid, Eisenchlorid, Zinkchlorid, Zinkfluorid, Zinnchlorid, Cobaltchlorid und Titanchlorid; sowie metallorganische Verbindungen, wie Metall-Alkoholate, Metall-Carboxylate oder Metall-Chelat-Komplexe von Aluminium, Kupfer, Zink, Titan, Eisen, Mangan, Cobalt, Chrom oder Nickel. Beispiele für metallorganische Verbindungen sind Cobalt(II)-naphthenat, Nickel(II)-naphthenat, Eisen(III)-naphthenat, Kupfer(II)-naphthenat, Mangan(II)-naphthenat, Aluminium(III)-naphthenat Zink(II)-naphthenat, Zink(II)-octoat, Zink(II)-acetylacetonat, Eisen(III)-acetylacetonat, Cobalt(II)-acetylacetonat, Chrom(III)-acetylacetonat, Aluminium(III)-acetylacetonat und Kupfer(II)-acetylacetonat.

Falls ein Beschleuniger (F1) für die Vernetzung der erfindungsgemäßen Zusammensetzungen eingesetzt wird so handelt es sich bevorzugt um eine Kombination einer metallorganischen Verbindung und einem Co-Beschleuniger, der mindestens ein aktives Proton besitzt, besonders bevorzugt um eine Kombination einer metallorganischen Verbindung und einem Phenol (C4), wie z.B. Nonylphenol.

Falls die erfindungsgemäßen Zusammensetzungen Beschleuniger (F1) enthalten, handelt es sich um Mengen von bevorzugt 0,00001 bis 5 Gewichtsteilen bezogen auf 100 Gewichtsteile Komponente (A), wobei metallorganische Verbindung (F1) besonders bevorzugt in Mengen von 0,0001 bis 0,02 Gewichtsteilen, bezogen auf 100 Gewichtsteile Komponente (A), eingesetzt werden.

Falls die erfindungsgemäßen Zusammensetzungen Imidgruppen-haltigen Modifikator (C1) oder Imidharz (D2) enthalten, können radikalbildende Beschleuniger (F2), wie organische Peroxide, z.B. Dicumylperoxid, Di-tert-butylperoxid, Dibenzoylperoxid, Dilauroylperoxid, 1,1-Bis(tert-butylperoxy)cyclohexan und tert-Butylperbenzoat; oder Azoverbindungen, wie Azobis(isobutyronitril); als Härtungsbeschleuniger entweder allein oder zusätzlich zu (F1) verwendet werden. Falls die erfindungsgemäßen Zusammensetzungen radikalbildende Beschleuniger (F2) enthalten, handelt es sich um Mengen von bevorzugt 0,1 bis 2 Gewichtsteile bezogen auf 100 Gewichtsteile der Summe aus Imidgruppen-haltigen Modifikator (C1) und Imidharz (D2). Bevorzugt werden keine radikalbildenden Beschleuniger (F2) eingesetzt.

**Verbindung (G)**

Beispiele für gegebenenfalls eingesetztes Lösungsmittel (G) sind ein- und mehrwertige Alkohole, wie Methanol, Ethanol, n-Propanol, Isopropanol, n-Butanol, iso-Butanol, sec-Butanol, 1,2-Ethandiol, 1,2-Propandiol, 1,3-Propandiol, Polypropylenglycol, Polyethylenglycol, 1,2-Butandiol, 1,3-Butandiol, Polybutylenglycol und Glycerin; Ether, wie Methyl-tert.-butylether, Di-tert.-butylether und Di-, Tri- oder Tetraethylenglycoldimethylether; gesättigte Kohlenwasserstoffe, wie n-Hexan, Cyclohexan, n-Heptan, n-Octan und isomere Octane, wie 2-Ethylhexan, 2,4,4-Trimethylpentan, 2,2,4-Trimethylpentan, 2-Methylheptan und Trichlorethylen, sowie Gemische gesättigter Kohlenwasserstoffe mit Siedebereichen zwischen 60-300°C, wie sie unter den Handelsnamen Exxsol™, Hydroseal® oder Shellsol® erhältlich sind; aromatische Lösungsmittel, wie Benzol, Toluol, Styrol, o-, m- oder p-Xylol, Solvent Naphta, Dimethylphthalat, Di-iso-butylphthalat, Dicyclohexylphthalat, Mesitylen und Chlorbenzol; Aldehyd-Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Dipropylcarbonat, Propylenglycolcarbonat, Ethylencarbonat; Ketone, wie Aceton, Methyl-iso-butylketon, Methylethylketon, Methyl-iso-amylketon, Di-iso-butylketon, Aceton und Cyclohexanon; Ester, wie Ethylacetat, n-Butylacetat, Ethylenglykoldiacetat, gamma-Butyrolacton, 2-Methoxypropylacetat (MPA), Dipropylenglycol-dibenzoat und Ethylethoxypropionat; Amide, wie N,N-Dimethylformamid, N,N-Dimethylacetamid, N-Methyl-2-pyrrolidon und N-Ethyl-2-pyrrolidon; Acetonitril; und Dimethylsulfoxid.

Bevorzugte Lösungsmittel (G) sind aromatische Kohlenwasserstoffe und Ketone.

Falls die erfindungsgemäßen Zusammensetzungen Lösungsmittel (G) enthalten, handelt es sich um Mengen von bevorzugt 10 bis 500 Gewichtsteilen, besonders bevorzugt 50 bis 300 Gewichtsteilen, jeweils bezogen auf 100 Gewichtsteile der Summe der Komponenten (A) und (B). Die erfindungsgemäßen Zusammensetzungen enthalten bevorzugt kein Lösungsmittel (G).

**Verbindung (H)**

Bei erfindungsgemäß gegebenenfalls eingesetzter Komponente (H) handelt es sich bevorzugt um Pigmente, Farbstoffe, Riechstoffe, Verarbeitungshilfsmittel, wie Mittel zur Beeinflussung der Klebrigkeit, Gleitmittel, Entformungsmittel, Antiblockmitteloder Dispergiermittel; Stabilisatoren gegen Hydrolyse, Licht, Oxidation, Hitze, Verfärbung; flammabweisend machende Mittel oder Weichmacher.

Falls die erfindungsgemäßen Zusammensetzungen weitere Bestandteile (H) enthalten, handelt es sich um Mengen von bevorzugt 0,01 bis 20 Gewichtsteilen, besonders bevorzugt 0,1 bis 10 Gewichtsteilen, jeweils bezogen auf 100 Gewichtsteile der Summe von Komponenten (A) und (B). Die erfindungsgemäßen Zusammensetzungen enthalten bevorzugt keine weiteren Bestandteile (H).

Vorzugsweise handelt es sich bei den erfindungsgemäßen Zusammensetzungen um solche, enthaltend

(A) mindestens ein Cyanatesterharz,
(B) mindestens ein Cyclosiloxan,

gegebenenfalls (C) mindestens einen Modifikator,
gegebenenfalls (D) mindestens ein Reaktivharz,
(E) mindestens einen Füllstoff,
gegebenenfalls (F) mindestens einen Beschleuniger,
gegebenenfalls (G) mindestens ein Lösungsmittel und
gegebenenfalls (H) weitere Bestandteile.

Bevorzugt handelt es sich bei den erfindungsgemäßen Zusammensetzungen um solche, enthaltend

(A) mindestens ein Cyanatesterharz,
(B) mindestens ein Cyclosiloxan,
(C) mindestens einen Modifikator,

gegebenenfalls (D) mindestens ein Reaktivharz,
(E1) mindestens einen faserverstärkenden Füllstoff,
gegebenenfalls (F) mindestens einen Beschleuniger,
gegebenenfalls (G) mindestens ein Lösungsmittel und
gegebenenfalls (H) weitere Bestandteile.

In einer besonders bevorzugten Ausführungsform handelt es sich bei den erfindungsgemäßen Zusammensetzungen um solche, enthaltend

(A) mindestens ein Cyanatesterharz,
(B) mindestens ein Cyclosiloxan,

gegebenenfalls (C) mindestens einen Modifikator,

(D1) mindestens ein Epoxidharz,
(E1) mindestens einen faserverstärkenden Füllstoff,

gegebenenfalls (F) mindestens einen Beschleuniger,
gegebenenfalls (G) mindestens ein Lösungsmittel und
gegebenenfalls (H) weitere Bestandteile.

Insbesondere handelt es sich bei den erfindungsgemäßen Zusammensetzungen um solche, enthaltend

(A) mindestens ein Cyanatesterharz,
(B) mindestens ein Cyclosiloxan,
(C) mindestens einen Modifikator,
(D1) mindestens ein Epoxidharz,
(E1) mindestens einen faserverstärkenden Füllstoff,
gegebenenfalls (F) mindestens einen Beschleuniger,
gegebenenfalls (G) mindestens ein Lösungsmittel und
gegebenenfalls (H) weitere Bestandteile.

In einer weiteren besonders bevorzugten Ausführungsform handelt es sich bei den erfindungsgemäßen Zusammensetzungen um solche, enthaltend

(A) mindestens ein Cyanatesterharz,
(B) mindestens ein Cyclosiloxan,

gegebenenfalls (C) ein Modifikator ausgewählt aus der Gruppe

(C1) bis (C4),
(D2) mindestens ein Maleimidharz,
(E1) mindestens einen faserverstärkenden Füllstoff,
gegebenenfalls (F) mindestens einen Beschleuniger,
gegebenenfalls (G) mindestens ein Lösungsmittel und
gegebenenfalls (H) weitere Bestandteile,
mit der Maßgabe, dass mindestens eine Komponente (A), (C3) oder
(C4) mit an aromatischen Kohlenstoffatomen direkt gebundenen Propenyl-Gruppen enthalten ist.

Insbesondere handelt es sich bei den erfindungsgemäßen Zusammensetzungen um solche, enthaltend

(A) mindestens ein Cyanatesterharz,
(B) mindestens ein Cyclosiloxan,
gegebenenfalls (C) mindestens ein Modifikator ausgewählt aus der Gruppe (C1) bis (C4),
(C) mindestens einen weiteren von (C4) verschiedenen Modifikator,
(D) mindestens ein polymerisierbares Maleimidharz,
(E1) mindestens einen faserverstärkenden Füllstoff,

gegebenenfalls (F) mindestens einen Beschleuniger,
gegebenenfalls (G) mindestens ein Lösungsmittel und
gegebenenfalls (H) weitere Bestandteile,
mit der Maßgabe, dass mindestens eine Komponente (A), (C3) oder (C4) mit an aromatischen Kohlenstoffatomen direkt gebundenen Propenyl-Gruppen enthalten ist.

Die erfindungsgemäßen Zusammensetzungen enthalten außer den Komponenten (A), (B), den gegebenenfalls eingesetzten Komponenten (C) bis (H) sowie gegebenenfalls rohstofftypischen Verunreinigungen, wie beispielsweise Katalysatorreste, wie Natriumchlord oder Kaliumchlorid; sowie Verunreinigungen in technischen Cyanatesterharz-Monomeren und gegebenenfalls Umsetzungsprodukte der eingesetzten Komponenten, die beim Vermischen bzw. bei der Lagerung entstehen, keine weiteren Komponenten.

In den erfindungsgemäßen Zusammensetzungen können die bisher beschriebenen Komponenten jeweils einzeln oder in Form eines Gemisches aus mindestens zwei der jeweiligen Komponente eingesetzt werden.

Die Herstellung der erfindungsgemäßen Zusammensetzungen kann nach bekannten Verfahren erfolgen, wie beispielsweise durch Mischen der einzelnen Komponenten in beliebiger Reihenfolge und auf bisher bekannte Art und Weise.

Ein weiterer Gegenstand der vorliegenden Erfindung ist ein Verfahren zur Herstellung der erfindungsgemäßen Zusammensetzungen durch Vermischung der einzelnen Komponenten in beliebiger Reihenfolge.

Bei dem erfindungsgemäßen Verfahren kann das Vermischen bei Temperaturen im Bereich von bevorzugt 20 bis 150°C, besonders bevorzugt im Bereich von 50 bis 130°C, insbesondere bei Temperaturen von 60 bis 120°C erfolgen. Ganz besonders bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen oder bei Überdruck zu arbeiten, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Das erfindungsgemäße Verfahren kann kontinuierlich, diskontinuierlich oder semikontinuierlich durchgeführt werden, bevorzugt wird es diskontinuierlich durchgeführt.

In einer bevorzugten Ausführungsform des erfindungsgemäßen Verfahrens zur Herstellung der Zusammensetzungen werden die einzelnen Komponenten in beliebiger Reihenfolge vermischt, wobei als Füllstoff (F) Komponente (F1) eingesetzt wird.

Die erfindungsgemäßen Zusammensetzungen können für alle Zwecke eingesetzt werden, für die auch bisher Prepolymere von Duroplasten eingesetzt worden sind.

Die erfindungsgemäßen Zusammensetzungen können nach bekannten Verarbeitungstechniken zu Formkörpern verarbeitet werden, z.B. durch Prepregging (aus der Schmelze, Lösung oder Suspension), Spritzpressen, Transferformung (Resin Transfer Moulding), Wickelverfahren (Filament Winding), Formpressen, Pulverbeschichtung und Pultrusion.

Bei einer Variante des erfindungsgemäßen Verfahrens werden bevorzugt zunächst die Komponenten (A) und (B) sowie die optionalen Komponenten (C), (D), (G) und (H) in beliebiger Reihenfolge zu einer Vormischung vermischt, und dann wird Komponente (E1), bevorzugt Seile, Gewebe, Gelege, Gestricke oder Geflechte, mit der Vormischung gegebenenfalls unter Druck getränkt und gegebenenfalls entgast. Bei mehrlagigen Geweben oder Gelegen (E1) kann jede Schicht einzeln oder alle Schichten gemeinsam getränkt und entgast werden.

Bei einer weiteren bevorzugten Variante des erfindungsgemäßen Verfahrens werden zunächst die Komponenten (A) und (B) sowie die optionalen Komponenten (C), (D), (G) und (H) in beliebiger Reihenfolge zu einer Vormischung vermischt, und dann in ein Formnest, in welchem sich die Komponente (E1), bevorzugt Seile, Gewebe, Gelege, Gestricke oder Geflechte, befindet, injiziert, wobei bevorzugt während des Einspritzvorgangs gleichzeitig entgast wird.

Bei einer weiteren bevorzugten Variante des erfindungsgemäßen Verfahrens werden zunächst die Komponenten (A) und (B) sowie die optionalen Komponenten (C), (D), (G), und (H) in beliebiger Reihenfolge zu einer Vormischung vermischt, und dann auf ein Trennpapier aufgebracht; anschließend wird Komponente (E1), bevorzugt ausgerichtete Seile, Gewebe, Gelege, Gestricke oder Geflechte, zwischen zwei beschichteten Papierblättern verpresst und durch eine Reihe von geheizten Walzen geführt, um eine vollständige Benetzung der Komponente (E1) zu bewirken.

Die erfindungsgemäßen Zusammensetzungen können durch mechanischen Druck bei Temperatur der Umgebung oder gegebenenfalls bei erhöhter Temperatur in beliebige Form gebracht werden.

Die erfindungsgemäßen Zusammensetzungen sind bevorzugt formbar und werden besonders bevorzugt in einem Formnest bzw. um einen Formkörper modelliert und ausgehärtet.

Ein weiterer Gegenstand der Erfindung ist daher ein Verfahren zur Herstellung von Formkörpern durch Formung der Zusammensetzung und Aushärten.

Ein weiterer Gegenstand der Erfindung ist daher die Verwendung der erfindungsgemäßen Zusammensetzung zur Herstellung von Formkörpern.

Ein weiterer Gegenstand der Erfindung sind daher Formkörper erhältlich, aus den erfindungsgemäßen Zusammensetzungen durch Formgebung und Aushärtung.

Die erfindungsgemäßen bzw. erfindungsgemäß hergestellten Massen vernetzen durch Cyclotrimerisierung der Cyanatester-Gruppen aus (A), gegebenenfalls (C1) und gegebenenfalls (C3) zu 1,3,5-Triazineinheiten, gegebenenfalls in Gegenwart eines Beschleunigers (F1); sowie gegebenenfalls zusätzlich durch Cyclotri- und Cyclotetramerisierung von Kohlenstoff-Kohlenstoff-Dreifachbindungen, Additionsreaktion, Alder-En-Reaktion, Diels-Alder-Cycloaddition und Polymerisation, wobei außerdem intramolekulare Umlagerungen, Isomerisierungen und Rearomatisierungschritte stattfinden können. Falls die erfindungsgemäße Aushärtung zusätzlich auch durch Additionsreaktion und ggf. Umlagerung erfolgt, reagieren bevorzugt die gegebenenfalls anwesenden Epoxidgruppen aus (C1) und (D1) und der zu Triazineinheiten cyclisierten Cyanatester-Gruppen aus (A) miteinander und/oder es reagieren bevorzugt die gegebenenfalls anwesenden Hydroxidgruppen aus (C1), (C2) und (C4) mit den Cyanatester-Gruppen aus (A). Falls die erfindungsgemäße Aushärtung zusätzlich auch durch Cyclotri- und Cyclotetramerisierung von Kohlenstoff-Kohlenstoff-Dreifachbindungen erfolgt, reagieren bevorzugt die gegebenenfalls anwesenden reaktiven Kohlenstoff-Kohlenstoff-Dreifachbindungen von Imidharz (D2) und/oder Modifikator (C1) miteinander. Falls die erfindungsgemäße Aushärtung zusätzlich auch durch Polymerisation erfolgt, reagieren bevorzugt die gegebenenfalls anwesenden reaktiven Nadimido- oder Maleimidogruppen oder die Kohlenstoff-Kohlenstoff-Dreifachbindungen von Imidharz (D2) und/oder Modifikator (C1)miteinander, wobei sich an die Polymerisation gegebenenfalls Umlagerungen und gegebenenfalls Cycloadditionen anschließen können. Falls die erfindungsgemäße Aushärtung zusätzlich auch durch Alder-En- oder Diels-Alder-Reaktion erfolgt, reagieren bevorzugt die gegebenenfalls anwesenden reaktiven Gruppen von Imidharz (D2), besonders bevorzugt Maleimidharz (D2), und der gegebenenfalls anwesenden Propenylgruppen aus (A), (C1), (C3) und/oder (C4) miteinander, wobei sich besonders bevorzugt weitere Diels-Alder-Reaktionen und Rearomatisierungschritte anschließen.

Die erfindungsgemäßen bzw. erfindungsgemäß hergestellten Mischungen werden bevorzugt vor dem Aushärten entgast, besonders bevorzugt nach der Formgebung und vor dem Aushärten.

Die erfindungsgemäße Vernetzung erfolgt bevorzugt bei Temperaturen im Bereich von 50 bis 350°C, besonders bevorzugt von 100 bis 300°C, insbesondere von 120 bis 270°C. Ganz besonders bevorzugt erfolgt die erfindungsgemäße Vernetzung stufenweise bei Temperaturen von 120 bis 270°C.

Durch Erhöhung der Temperatur kann die Vernetzung beschleunigt werden, so dass die Formgebung und die Vernetzung auch in einem gemeinsamen Schritt durchgeführt werden können.

Bei den erfindungsgemäßen Formkörpern handelt es sich bevorzugt um Faserverbundwerkstoffe.

Ein weiterer Gegenstand der Erfindung ist ein Verfahren zur Herstellung von Faserverbundwerkstoffen, dadurch gekennzeichnet, dass die erfindungsgemäßen Zusammensetzungen geformt und vernetzt werden.

Die erfindungsgemäßen Zusammensetzungen aus (A) und (B) härten bevorzugt zu makroskopisch homogen transparenten Duromeren aus.

Die erfindungsgemäßen Zusammensetzungen können bei 100°C und 1013 hPa fest oder flüssig sein, wobei sie bei 100°C und 1013 hPa bevorzugt flüssig sind.

Falls die erfindungsgemäßen Zusammensetzungen bei 100°C und 1013 hPa flüssig sind, haben sie eine dynamische Viskosität von vorzugsweise mehr als 1 und weniger als 5 000 mPa·s, bevorzugt mehr als 1 und weniger als 2 000 mPa·s, besonders bevorzugt mehr als 1 weniger als 1 000 mPa·s, insbesondere mehr als 1 und weniger als 500 mPa·s, jeweils bei 100°C und 1013 hPa.

Im Rahmen der vorliegenden Erfindung wird die dynamische Viskosität nach DIN 53019 bei einer Temperatur, sofern nicht anders angegeben, von 23°C und einem Luftdruck von 1013 hPa bestimmt. Die Messung wird mit einem Rotationsrheometer "Physica MCR 300" von der Firma Anton Paar durchgeführt. Dabei wird für Viskositäten von 1 bis 200 mPa·s ein koaxiales Zylinder-Messsystem (CC 27) mit einem Ring-Messspalt von 1,13 mm genutzt, für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s$^{-1}$; 100 bis 999 mPa·s bei 200 s$^{-1}$; 1000 bis 2999 mPa·s bei 120 s$^{-1}$; 3000 bis 4999 mPa·s bei 80 s$^{-1}$; 5000 bis 9999 mPa·s bei 62 s$^{-1}$; 10000 bis 12499 mPa·s bei 50 s$^{-1}$; 12500 bis 15999 mPa·s bei 38,5 s$^{-1}$; 16000 bis 19999 mPa·s bei 33 s$^{-1}$; 20000 bis 24999 mPa·s bei 25 s$^{-1}$; 25000 bis 29999 mPa·s bei 20 s$^{-1}$; 30000 bis 39999 mPa·s bei 17 s$^{-1}$; 40000 bis 59999 mPa·s bei 10 s$^{-1}$; 60000 bis 149999 bei 5 s$^{-1}$; 150000 bis 199999 mPa·s bei 3,3 s$^{-1}$; 200000 bis 299999 mPa·s bei 2,5 s$^{-1}$; 300000 bis 1000000 mPa·s bei 1,5 s$^{-1}$.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängigen Schergeschwindigkeit, bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

Die erfindungsgemäßen ausgehärteten duromeren Zusammensetzungen aus (A) und (B) weisen nach 800 Stunden Lagerung bei 230°C einen Gewichtsverlust auf, der vorzugsweise maximal 100%, bevorzugt maximal 80%, besonders bevorzugt maximal 60%, insbesondere maximal 40%, höher ist im Vergleich zu den entsprechenden unmodifizierten Cyanatesterharzen (A).

Die erfindungsgemäßen ausgehärteten duromeren Zusammensetzungen aus (A) und (B) weisen nach 2000 Stunden Wasserlagerung bei 70°C eine um vorzugsweise mindestens 10%, bevorzugt mindestens 20%, besonders bevorzugt mindestens 30%, insbesondere mindestens 40%, verringerte Wasseraufnahme auf im Vergleich zu den entsprechenden unmodifizierten Cyanatesterharzen (A).

Bevorzugt ist der Quotient des Biege-Elastizitätsmoduls E von den ausgehärteten, erfindungsgemäßen Zusammensetzungen aus (A) und (B), zu dem jeweiligen ausgehärteten, nicht modifizierten Cyanatesterharz (A), kleiner 1, jeweils gemessen bei 23°C.

Bevorzugt ist der Quotient des kritischen Spannungsintensitätsfaktors $K_{Ic}$ von den ausgehärteten, erfindungsgemäßen Zusammensetzungen aus (A) und (B), zu dem jeweiligen ausgehärteten, nicht modifizierten Cyanatesterharz (A), größer 1, jeweils gemessen bei 23°C.

Die erfindungsgemäßen Zusammensetzungen haben den Vorteil, dass sie aus leicht zugänglichen Rohstoffen und auf einfache Art und Weise hergestellt werden können.

Die erfindungsgemäßen Formkörper haben den Vorteil, dass sie hitzestabil sind und eine verringerte Brandlast im Vergleich zu Verbundmaterialien mit rein organischen Bindemitteln auf Cyanatesterbasis haben.

Die erfindungsgemäßen Formkörper haben den Vorteil, dass sie eine deutlich verringerte Wasseraufnahme und damit eine bessere Hydrolysebeständigkeit aufweisen.

Die erfindungsgemäßen Formkörper haben den Vorteil, dass sie eine hohe thermo-oxidative Stabilität aufweisen.

Die erfindungsgemäßen Zusammensetzungen haben den Vorteil, dass sich sogenannte Composite herstellen lassen, welche hochtemperaturbeständig sind, eine hohe Glasübergangstemperatur, eine hohe Steifigkeit und eine hohe Risszähigkeit, ausgedrückt durch den kritischen Spannungsintensitätsfaktor ($K_{Ic}$), aufweisen.

Die erfindungsgemäßen Zusammensetzungen haben den Vorteil, dass bei der Verarbeitung keine gesundheitsschädlichen Emissionen in dem Umfang entstehen wie sie üblicherweise bei nach dem Stand der Technik eingesetzten Cyanatesterharzen auftreten.

**Ausführungsbeispiele**

Die nachfolgenden Beispiele beschreiben die prinzipielle Ausführbarkeit der vorliegenden Erfindung, ohne jedoch diese auf die darin offenbarten Inhalte zu beschränken.

Die nachfolgenden Beispiele wurden bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt.

**Gewichtsmittel-Molmasse Mw**

Im Rahmen der vorliegenden Erfindung werden die Gewichtsmittel-Molmasse Mw, gerundet auf ganze 10er Zahlen entsprechend DIN 1333:1992-02 Abschnitt 4, mit Größenausschlusschromatographie (SEC/GPC)entsprechend DIN 55672-1/ISO 160414-1 sowie ISO 160414-3 bestimmt, indem ein Säulensatz basierend auf Polystyrol-co-Divinylbenzol als stationärer Phase aus drei Säulen unterschiedlicher Porengrößenverteilung der Reihenfolge nach 10000 Ä, 500 Ä und 100 Ä mit einer Ausschlussgröße von größer als 450,000 g/mol gegen Polystyrol-Standards kalibriert wird. Phenyl-haltige Komponenten werden mit THF als Eluent bestimmt, nicht-phenyl-haltige mit Toluol als Eluent. Die Analysen werden bei einer Säulentemperatur von 4011°C und mittels Brechungsindex-Detektor durchgeführt.

**Herstellung der Prüfkörper**

Zunächst wurde das Cyanatesterharz (A) unter Rühren auf 100°C erwärmt zur besseren Verarbeitbarkeit. Dann wurde Cyclosiloxan (B) zugegeben, die Mischung wurde 1 Stunde bei 120°C homogenisiert, anschließend eine Stunde bei 120°C und einem Druck von 10 mbar entgast und nach dem Brechen des Vakuums mit Stickstoff sofort in eine auf 120°C vorgewärmte 2-teilige verschraubbare Gussform aus Aluminium heiß eingefüllt; die Formnest-Dimensionen betrugen dabei 100 mm × 12,7 mm × 2,5 mm (Länge × Breite × Höhe) zur Herstellung der Prüfkörper für den Biegezugversuch und 200 mm × 100 mm × 6,5 mm (Länge × Breite × Höhe) zur Herstellung der Prüfkörper zur Bestimmung der Risszähigkeit, der Wasseraufnahme und der thermo-oxidativen Stabilität. Um ein Anhaften und Auslaufen zu vermeiden wurde die Formnest-Oberfläche auf den Innenseiten der Gussform mit einem Polytetrafluorethylen-Spray behandelt und um das Formnest herum eine 2 mm dicke Rundschnur aus Fluorkautschuk mit einer Härte von 75 Shore A gelegt. Zur Härtung wurden die befüllten Formen in einem Umluftofen entsprechend dem folgendem Temperaturprogramm gelagert:

    1) 18 Stunden Härtung bei 180°C
    2) Temperaturerhöhung innert 30 Minuten auf 200°C
    3) 3 Stunden Härtung bei 200°C
    4) Temperaturerhöhung innert 30 Minuten auf 240°C
    5) 2 Stunden Härtung bei 240°C.

Anschließend ließ man die Probekörper in den Formen auf Umgebungstemperatur abkühlen bevor diese entformt wurden. Für die weitere Verwendung wurden die oberen 10 mm der Vulkanisat-Seite, die während der Aushärtung in der Gussform offen und luftzugewandt war, abgetrennt und verworfen. Dann wurden die Prüfkörper zur Messung der Risszähigkeit, der Wasseraufnahme und der thermo-oxidativen Stabilität mit einer Diamant-Trennsäge aus der großen Vulkanisat-Platte mit der Höhe 6,5 mm in den entsprechenden Dimensionen Länge × Breite herausgetrennt, sodass alle vier Prüfkörper-Seitenflächen der Höhe 6,5 mm gesägt waren; die 1,00 mm dicken Prüfkörper zur Messung der Wasseraufnahme wurden aus dem vorgesägten Stück mit einer Innenloch-Diamantsäge aus dem inneren Teil herausgeschnitten, sodass bei diesen Prüfkörpern alle sechs Flächen gesägt waren.

**Risszähigkeit K$_{Ic}$**

Die Messung der Risszähigkeit bzw. des kritischen Spannungsintensitätsfaktors K$_{Ic}$ wurde wie in der Veröffentlichung "Reactive and Functional Polymers 142(2019)159-182" beschrieben bei 23°C und 50% relative Feuchte durchgeführt; die Dicke der Probenkörper betrug dabei 6,5 mm. Der in Tabelle 1 angegebene Wert für die Risszähigkeit K$_{Ic}$ wurde in MN × m$^{-3/2}$ angegeben und auf drei Nachkommastellen entsprechend DIN 1333:1992-02 Abschnitt 4 gerundet.

**Biege-Elastizitätsmodul E**

In der vorliegenden Erfindung wurde der Biege-Elastizitätsmodul nach ISO 178:2011-04 Verfahren A mit einer Prüfgeschwindigkeit von 2 mm/min bei einer Auflagedistanz L von 38 mm gemessen. Die Messungen wurden bei 23°C und 50% relative Feuchte durchgeführt. Es wurden quaderförmige Prüfkörper in den Dimensionen Länge × Breite × Dicke = 60,0 mm × 12,7 mm × 2,5 mm verwendet. Die Messungen wurden an jeweils 5 Prüfkörpern durchgeführt. Der in Tabelle 1 angegebene Wert für den Biege-Elastizitätsmodul E in GPa entspricht dem jeweiligen Mittelwert der Einzelmessungen, gerundet auf eine Nachkommastelle entsprechend DIN 1333:1992-02 Abschnitt 4.

**Wasseraufnahme**

In der vorliegenden Erfindung wurden für die gravimetrische Wasseraufnahme quaderförmige Prüfkörper in den Dimensionen Länge × Breite × Dicke = 30,00 mm × 17,00 mm × 1,00 mm verwendet; die Genauigkeit der Gewichtsbestimmung betrug ±0,01 mg. Die Prüfkörper wurden zunächst in einem Vakuumofen bei 70°C und 30 mbar bis zur Gewichtskonstanz getrocknet, wobei das Gewicht in Intervallen von 24 Stunden bestimmt wurde. Die Prüfkörper galten als "trocken" wenn über einen Zeitraum von 48 Stunden kein weiterer Gewichtsverlust gemessen wurde. Jeweils ein trockener Prüfkörper wurde anschließend in einem geeigneten verschließbaren Gefäß in 45 ml deionisiertes Wasser eingetaucht; das verschlossene Gefäß wurde dann in einen auf 70°C vorgeheizten Umluftofen gestellt und bei dieser Temperatur während des gesamten Prüfzeitraums temperiert. Nach 2000 Stunden wurden die Prüfkörper entnommen, auf Umgebungstemperatur abgekühlt und die Oberflächen mit einem Tuch trocken gewischt; anschließend wurde das Gewicht der Prüfkörper erneut bestimmt. Die Wasseraufnahme wurde berechnet nach

$$\left( \frac{\text{Gewicht nach Wasserlagerung in g}}{\text{Gewicht nach Trocknung und vor Wasserlagerung in g}} - 1 \right)$$ ; in Tabelle 1 wurde der Wert für die Wasseraufnahme in % angegeben und auf zwei Nachkommastellen entsprechend DIN 1333:1992-02 Abschnitt 4 gerundet.

**Thermo-oxidative Stabilität**

In der vorliegenden Erfindung wurden für die gravimetrische Ermittlung der thermo-oxidativen Stabilität quaderförmige Prüfkörper in den Dimensionen Länge × Breite × Dicke = 12,00 mm × 6,50 mm × 6,50 mm verwendet; die Genauigkeit der Gewichtsbestimmung betrug ±0,1 mg. Die Prüfkörper wurden zunächst in einem Vakuumofen bei 70°C und 30 mbar bis zur Gewichtskonstanz getrocknet, wobei das Gewicht in Intervallen von 24 Stunden bestimmt wurde. Die Prüfkörper galten als "trocken" wenn über einen Zeitraum von 48 Stunden kein weiterer Gewichtsverlust gemessen wurde. Anschließend wurden die Prüfkörper in einem Umluftofen bei 230°C gelagert. Nach 800 Stunden wurden die Prüfkörper entnommen und das Gewicht der Prüfkörper erneut bestimmt. Die Gewichtsabnahme wurde berechnet nach

$$\left( \frac{\text{Gewicht nach 230°C-Lagerung in g}}{\text{Gewicht nach Trocknung und vor 230°C-Lagerung in g}} - 1 \right)$$ ; in Tabelle 1 wurde der Wert für die Gewichtsabnahme in % angegeben und auf zwei Nachkommastellen entsprechend DIN 1333:1992-02 Abschnitt 4 gerundet.

**Beispiel B1**

85 g 2,2-Bis(4-cyanatophenyl)propan (CAS 1156-51-0; käuflich erhältlich bei TCI Deutschland GmbH, D-65760 Eschborn) als Komponente (A) wurden mit 15 g Octaphenylcyclotetrasiloxan (CAS 546-56-5; käuflich erhältlich bei der Sigma-Aldrich Chemie GmbH, D-Steinheim) als Komponente (B) wie unter *"Herstellung der Prüfkörper"* beschrieben vermischt, in Gussformen abgefüllt und ausgehärtet. Es wurde ein homogenes, transparentes Vulkanisat erhalten, dass kein oberflächliches Ausschwitzen der Siloxankomponente zeigte.

**Vergleichsbeispiel V1**

Die in Beispiel 1 beschriebene Verfahrensweise wurde wiederholt mit der Abänderung, dass kein Octaphenylcyclotetrasiloxan zur Komponente (A) hinzugefügt wurde.

Tabelle 1

| Beispiel | B1 | V1 |
|---|---|---|
| Biege-Elastizitätsmodul E bei 23°C [GPa] | 2,5 | 3,0 |
| Spannungsintensitätsfaktor $K_{Ic}$ bei 23°C [MN × m$^{-3/2}$] | 0,535 | 0,505 |
| Wasseraufnahme bei 70°C nach 2000 Stunden [%] | 1,65 | 3,29 |
| Thermo-oxidative Stabilität bei 230°C nach 800 Stunden[%] | -3,48 | -2, 61 |

**Patentansprüche**

1. Vernetzbare Zusammensetzung enthaltend

   (A) mindestens eine organische, von Siloxaneinheiten freie Verbindung mit mindestens zwei reaktiven Cyanatester-Gruppen (= "N≡C-O-"),
   (B) mindestens ein Cyclosiloxan der allgemeinen Formel (I)

   $$[R_a R^1_b SiO_{2/2}]_m \qquad (I),$$

   wobei

   R gleich oder verschieden sein kann und einwertige, SiC-gebundene, gesättigte aliphatische Kohlenwasserstoffreste bedeutet,
   $R^1$ gleich oder verschieden sein kann und einwertige, SiC-gebundene, gegebenenfalls mit Halogen- oder Phosphoratom substituierte, aromatische Kohlenwasserstoffreste bedeutet,
   a 0, 1 oder 2, bevorzugt 0 oder 1, besonders bevorzugt 0, ist,
   b 0, 1 oder 2, bevorzugt 1 oder 2, besonders bevorzugt 2, ist,
   m gleich 3, 4 oder 5, bevorzugt 3 oder 4, besonders bevorzugt 4, ist,
   mit der Maßgabe, dass
   a+b gleich 2 ist und pro Siloxanmolekül (B) mindestens drei Reste $R^1$ anwesend sind.

2. Vernetzbare Zusammensetzung gemäß Anspruch 1, **dadurch gekennzeichnet, dass** sie zusätzlich
   (E) mindestens einen Füllstoff enthält.

3. Vernetzbare Zusammensetzung gemäß Anspruch 1, **dadurch gekennzeichnet, dass** sie zusätzlich

   (C) mindestens einen Modifikator, und
   (E1) mindestens einen faserverstärkenden Füllstoff enthält.

4. Vernetzbare Zusammensetzung gemäß Anspruch 1, **dadurch gekennzeichnet, dass** sie zusätzlich

   (D1) mindestens ein Epoxidharz, und
   (E1) mindestens einen faserverstärkenden Füllstoff enthält.

5. Vernetzbare Zusammensetzung gemäß Anspruch 1, **dadurch gekennzeichnet, dass** sie zusätzlich

   (C) mindestens einen Modifikator, und
   (D1) mindestens ein Epoxidharz, und
   (E1) mindestens einen faserverstärkenden Füllstoff enthält.

6. Vernetzbare Zusammensetzung gemäß Anspruch 1, **dadurch gekennzeichnet, dass** sie zusätzlich

   gegebenenfalls (C) einen Modifikator ausgewählt aus der Gruppe (C1) bis (C4),
   (D2) mindestens ein Maleimidharz,
   (E1) mindestens einen faserverstärkenden Füllstoff enthält,
   mit der Maßgabe, dass mindestens eine Komponente (A), (C3) oder (C4) mit an aromatischen Kohlenstoffatomen direkt gebundenen Propenyl-Gruppen enthalten ist,
   und bei den Modifikatoren (C1) bis (C4) handelt es sich um:

   (C1) Organopolysiloxane, enthaltend Einheiten der Formel (II)

   $$R^3_m (OR^4)_n SiO_{(4-m-n)/2} \qquad (II)$$

   worin $R^3$ gleich oder verschieden sein kann und Wasserstoffatom oder einwertige oder zweiwertige, SiC-gebundene, gegebenenfalls substituierte auch bspw. mit Heteroatomen, Kohlenwasserstoffreste bedeutet, $R^4$ gleich oder verschieden sein kann und Wasserstoffatom oder einwertige, gegebenenfalls substituierte Kohlenwasserstoffreste mit 1 bis 18 Kohlenstoffatomen bedeutet, m 0, 1, 2 oder 3, bevorzugt 1, 2 oder 3, ist, n 0, 1, 2 oder 3, bevorzugt 0, 1 oder 2, besonders bevorzugt 0 oder 1, insbesondere 0, ist und mit der Maßgabe, dass in Formel (II) die Summe m+n≤3 betragt, in höchstens 20%, bevorzugt höchstens 15%, besonders bevorzugt höchstens 10%, insbesondere höchstens 5% der Einheiten der Formel (II) m=0 ist; in höchstens 1,0%, bevorzugt höchstens 0,5%, besonders bevorzugt höchstens 0,3%, insbesondere höchstens 0,2% der Einheiten der Formel (II) $R^4$ gleich Wasserstoffatom ist, jeweils bezogen auf alle Siloxaneinheiten der Formel (II) in Organopolysiloxan (C1); und dass cyclische Siloxane der Formel (II) mit m=2 und n=0 mindestens eine Einheit der Formel (II) mit $R^3$ gleich einen reaktiven, von Halogen- und Phosphoratomfreien, funktionellen Rest enthalten;

(C2) Cyanatester-Gruppen freie, thermoplastische organische Polymere;

(C3) monofunktionelle Cyanatester der allgemeinen Formel (III) handeln $R^4$-OCN (III), worin $R^4$ ein einwertiger, gegebenenfalls substituierter (bspw. auch mit Heteroatomen), aromatischer Kohlenwasserstoffrest bedeutet mit der Maßgabe, dass die Cyanatester-Gruppe direkt an ein aromatisches Kohlenstoffatom gebundenen ist; und

(C4) monomere Hydroxy- und gegebenenfalls Propenyl-funktionalisierte, organische Verbindungen, welche keine weiteren zur Polymerisationsreaktion geeigneten reaktiven funktionellen Gruppen enthalten.

7. Vernetzbare Zusammensetzung gemäß Anspruch 1, **dadurch gekennzeichnet, dass** sie zusätzlich gegebenenfalls (C) mindestens einen Modifikator ausgewählt aus der Gruppe (C1) bis (C4),

(C) mindestens einen weiteren von (C4) verschiedenen Modifikator,
(D) mindestens ein polymerisierbares Maleimidharz,
(E1) mindestens einen faserverstärkenden Füllstoff enthält, mit der Maßgabe, dass mindestens eine Komponente (A), (C3) oder (C4) mit an aromatischen Kohlenstoffatomen direkt gebundenen Propenyl-Gruppen enthalten ist, und bei den Modifikatoren (C1) bis (C4) handelt es sich um:

(C1) Organopolysiloxane, enthaltend Einheiten der Formel (II)

$$R^3{}_m(OR_4)_n SiO_{(4-m-n)/2} \qquad (II)$$

worin $R^3$ gleich oder verschieden sein kann und Wasserstoffatom oder einwertige oder zweiwertige, SiC-gebundene, gegebenenfalls substituierte auch bspw. mit Heteroatomen, Kohlenwasserstoffreste bedeutet, $R^4$ gleich oder verschieden sein kann und Wasserstoffatom oder einwertige, gegebenenfalls substituierte Kohlenwasserstoffreste mit 1 bis 18 Kohlenstoffatomen bedeutet, m 0, 1, 2 oder 3, bevorzugt 1, 2 oder 3, ist, n 0, 1, 2 oder 3, bevorzugt 0, 1 oder 2, besonders bevorzugt 0 oder 1, insbesondere 0, ist und mit der Maßgabe, dass in Formel (II) die Summe m+n≤3 betragt, in höchstens 20%, bevorzugt höchstens 15%, besonders bevorzugt höchstens 10%, insbesondere höchstens 5% der Einheiten der Formel (II) m=0 ist; in höchstens 1,0%, bevorzugt höchstens 0,5%, besonders bevorzugt höchstens 0,3%, insbesondere höchstens 0,2% der Einheiten der Formel (II) $R^4$ gleich Wasserstoffatom ist, jeweils bezogen auf alle Siloxaneinheiten der Formel (II) in Organopolysiloxan (C1); und dass cyclische Siloxane der Formel (II) mit m=2 und n=0 mindestens eine Einheit der Formel (II) mit $R^3$ gleich einen reaktiven, von Halogen- und Phosphoratomfreien, funktionellen Rest enthalten;

(C2) Cyanatester-Gruppen freie, thermoplastische organische Polymere;

(C3) monofunktionelle Cyanatester der allgemeinen Formel (III) handeln $R^4$-OCN (III), worin $R^4$ ein einwertiger, gegebenenfalls substituierter (bspw. auch mit Heteroatomen), aromatischer Kohlenwasserstoffrest bedeutet mit der Maßgabe, dass die Cyanatester-Gruppe direkt an ein aromatisches Kohlenstoffatom gebundenen ist; und

(C4) monomere Hydroxy- und gegebenenfalls Propenyl-funktionalisierte, organische Verbindungen, welche keine weiteren zur Polymerisationsreaktion geeigneten reaktiven funktionellen Gruppen enthalten.

8. Verfahren zur Herstellung der vernetzbaren Zusammensetzungen, gemäß einem der Ansprüche 1 bis 7, durch Vermischung der einzelnen Komponenten in beliebiger Reihenfolge.

9. Verfahren zur Herstellung von Formkörpern, durch Formung der vernetzbaren Zusammensetzung, gemäß einem der Ansprüche 1 bis 7 und anschließendem Aushärten.

10. Verwendung der vernetzbaren Zusammensetzungen, gemäß einem der Ansprüche 1 bis 7, zur Herstellung von Formkörpern.

**11.** Formkörper erhältlich aus dem Verfahren gemäß den Ansprüchen 8 oder 9.

**Claims**

**1.** Crosslinkable composition containing

(A) at least one organic compound free of siloxane units having at least two reactive cyanate ester groups (= "N≡C-O-"),
(B) at least one cyclosiloxane of general formula (I)

$$[R_aR^1_bSiO_{2/2}]_m \qquad (I),$$

wherein

R may be identical or different and represents monovalent, SiC-bonded, saturated aliphatic hydrocarbon radicals,
$R^1$ may be identical or different and represents monovalent, SiC-bonded, optionally halogen- or phosphorus-substituted, aromatic hydrocarbon radicals,
a is 0, 1 or 2, preferably 0 or 1, particularly preferably 0,
b is 0, 1 or 2, preferably 1 or 2, particularly preferably 2,
m is 3, 4 or 5, preferably 3 or 4, particularly preferably 4,
with the proviso that
a+b is 2 and at least three radicals $R^1$ are present per siloxane molecule (B).

**2.** Crosslinkable composition according to Claim 1, **characterized in that** it additionally contains (E) at least one filler.

**3.** Crosslinkable composition according to Claim 1, **characterized in that** it additionally contains

(C) at least one modifier and
(E1) at least one fibre-reinforcing filler.

**4.** Crosslinkable composition according to Claim 1, **characterized in that** it additionally contains

(D1) at least one epoxy resin and
(E1) at least one fibre-reinforcing filler.

**5.** Crosslinkable composition according to Claim 1, **characterized in that** it additionally contains

(C) at least one modifier and
(D1) at least one epoxy resin and
(E1) at least one fibre-reinforcing filler.

**6.** Crosslinkable composition according to Claim 1, **characterized in that** it additionally contains optionally (C) a modifier selected from the group (C1) to (C4),

(D2) at least one maleimide resin,
(E1) at least one fibre-reinforcing filler,
with the proviso that at least one component (A), (C3) or (C4) having propenyl groups directly bonded to aromatic carbon atoms is present
and where the modifiers (C1) to (C4) are:

(C1) organopolysiloxanes containing units of formula (II) $R^3_m(OR^4)_nSiO_{(4-m-n)/2}$ (II),
wherein $R^3$ may be identical or different at each occurrence and represents hydrogen or monovalent or divalent, SiC-bonded, optionally substituted, for example heteroatom-substituted, hydrocarbon radicals, $R^4$ may be identical or different at each occurrence and represents hydrogen or monovalent, optionally substituted hydrocarbon radicals having 1 to 18 carbon atoms, m is 0, 1, 2 or 3, preferably 1, 2 or 3, n is 0, 1, 2 or 3, preferably 0, 1 or 2, particularly preferably 0 or 1, in particular 0, and with the proviso that in formula (II) the sum m+n is <3, in not more than 20%, preferably not more than 15%, particularly preferably not more than 10%, in particular not more than 5%, of the units of the formula (II) m=0; in not more than 1.0%, preferably not more than 0.5%, particularly preferably not more than 0.3%, in particular not more than 0.2%, of the units of formula (II) $R^4$ is hydrogen, in each case based on all siloxane units of formula (II) in organopolysiloxane (C1); and that cyclic siloxanes of formula (II) where m=2 and n=0 contain at least one unit of formula (II) where $R^3$ is a reactive, halogen- and phosphorus-free functional radical;

(C2) cyanate ester-free, thermoplastic organic polymers;

(C3) monofunctional cyanate esters of general formula (III) $R^4$-OCN (III), wherein $R^4$ represents a monovalent, optionally substituted (for example also heteroatom-substituted) aromatic hydrocarbon radical with the proviso that the cyanate ester group is directly bonded to an aromatic carbon atom; and

(C4) monomeric hydroxyl- and optionally propenyl-functionalized organic compounds which contain no further reactive functional groups suitable for the polymerization reaction.

7. Crosslinkable composition according to Claim 1, **characterized in that** it additionally contains optionally (C) at least one modifier selected from the group (C1) to (C4),

(C) at least one further modifier distinct from (C4),
(D) at least one polymerizable maleimide resin,
(E1) at least one fibre-reinforcing filler,
with the proviso that at least one component (A), (C3) or (C4) having propenyl groups directly bonded to aromatic carbon atoms is present and where the modifiers (C1) to (C4) are:

(C1) organopolysiloxanes containing units of formula (II)

$$R^3{}_m(OR^4)SiO_{(4-m-n)/2} \qquad (II),$$

wherein $R^3$ may be identical or different at each occurrence and represents hydrogen or monovalent or divalent, SiC-bonded, optionally substituted, for example heteroatom-substituted, hydrocarbon radicals, $R^4$ may be identical or different at each occurrence and represents hydrogen or monovalent, optionally substituted hydrocarbon radicals having 1 to 18 carbon atoms, m is 0, 1, 2 or 3, preferably 1, 2 or 3, n is 0, 1, 2 or 3, preferably 0, 1 or 2, particularly preferably 0 or 1, in particular 0, and with the proviso that in formula (II) the sum m+n is <3, in not more than 20%, preferably not more than 15%, particularly preferably not more than 10%, in particular not more than 5%, of the units of the formula (II) m=0; in not more than 1.0%, preferably not more than 0.5%, particularly preferably not more than 0.3%, in particular not more than 0.2%, of the units of formula (II) $R^4$ is hydrogen, in each case based on all siloxane units of formula (II) in organopolysiloxane (C1); and that cyclic siloxanes of formula (II) where m=2 and n=0 contain at least one unit of formula (II) where $R^3$ is a reactive, halogen- and phosphorus-free functional radical;

(C2) cyanate ester-free, thermoplastic organic polymers;

(C3) monofunctional cyanate esters of general formula (III) $R^4$-OCN (III), wherein $R^4$ represents a monovalent, optionally substituted (for example also heteroatom-substituted) aromatic hydrocarbon radical with the proviso that the cyanate ester group is directly bonded to an aromatic carbon atom; and

(C4) monomeric hydroxyl- and optionally propenyl-functionalized organic compounds which contain no further reactive functional groups suitable for the polymerization reaction.

8. Process for producing the crosslinkable compositions according to any of Claims 1 to 7 by mixing the individual components in any desired sequence.

9. Process for producing shaped articles by shaping the crosslinkable composition according to any of Claims 1 to 7 and subsequent curing.

10. Use of the crosslinkable compositions according to any of Claims 1 to 7 for producing shaped articles.

11. Shaped articles obtainable from the process according to either of Claims 8 or 9.

**Revendications**

1. Composition réticulable contenant

(A) au moins un composé organique, exempt de motifs siloxane, ayant au moins deux groupes esters cyanates réactifs (= « N=C-O- »),

(B) au moins un cyclosiloxane de Formule générale (I)

$$[R_aR^1{}_bSiO_{2/2}]_m \qquad (I),$$

dans laquelle

R peut être identique ou différent et représente des radicaux hydrocarbonés saturés aliphatiques monovalents, liés à SiC,

$R^1$ peut être identique ou différent et représente des radicaux hydrocarbonés aromatiques monovalents, liés à SiC, éventuellement substitués par un atome d'halogène ou de phosphore,

a représente 0, 1 ou 2, de préférence 0 ou 1, d'une manière particulièrement préférée 0,

b représente 0, 1 ou 2, de préférence 1 ou 2, d'une manière particulièrement préférée 2,

m est égal à 3, 4 ou 5, de préférence à 3 ou 4, d'une manière particulièrement préférée à 4,

à la condition que a+b soit égal à 2 et qu'au moins deux radicaux $R^1$ soient présents par molécule de siloxane (B).

2. Composition réticulable selon la revendication 1, **caractérisée en ce qu'**elle contient en outre (E) au moins une matière de charge.

3. Composition réticulable selon la revendication 1, **caractérisée en ce qu'**elle contient en outre

(C) au moins un modifiant, et
(E1) au moins une matière de charge renforcée par des fibres.

4. Composition réticulable selon la revendication 1, **caractérisée en ce qu'**elle contient en outre

(D1) au moins une résine époxyde, et
(E1) au moins une matière de charge renforcée par des fibres.

5. Composition réticulable selon la revendication 1, **caractérisée en ce qu'**elle contient en outre

(C) au moins un modifiant, et
(D1) au moins une résine époxyde, et
(E1) au moins une matière de charge renforcée par des fibres.

6. Composition réticulable selon la revendication 1, **caractérisée en ce qu'**elle contient en outre éventuellement (C) un modifiant choisi dans le groupe

(C1) à (C4),
(D2) au moins une résine de maléimide,
(E1) au moins une matière de charge renforcée par des fibres,
à la condition que soit présent au moins un composant (A), (C3) ou (C4) ayant des groupes propényle directement liés à des atomes de carbone aromatiques,
et que les modifiants (C1) à (C4) sont :

(C1) des organopolysiloxanes, contenant des motifs de Formule (II)

$$R^3{}_m(OR^4)_nSiO_{(4-m-n)/2} \qquad (II)$$

dans laquelle $R^3$ peut être identique ou différent et représente un atome d'hydrogène ou des radicaux hydrocarbonés monovalents ou divalents, liés à SiC, éventuellement également substitués par exemple par des hétéroatomes, $R^4$ peut être identique ou différent et représente un atome d'hydrogène ou des radicaux hydrocarbonés monovalents éventuellement substitués ayant 1 à 18 atomes de carbone, m représente 0, 1, 2 ou 3, de préférence 1, 2 ou 3, n représente 0, 1, 2 ou 3, de préférence 0, 1 ou 2, d'une manière particulièrement préférée 0 ou 1, en particulier 0, et à la condition que dans la Formule (II) la somme m + n soit < 3, m étant égal à 0 dans au plus 20 %, de préférence au plus 15 %, d'une manière particulièrement préférée au plus 10 %, en particulier au plus 5 % des motifs de Formule (II) ; dans au plus 1,0 %, de préférence au plus 0,5 %, d'une manière particulièrement préférée au plus 0,3 %, en particulier au plus 0,2 % des motifs de Formule (II), $R^4$ représente un atome d'hydrogène, dans chaque cas par rapport à tous les motifs siloxane de Formule (II) se trouvant dans l'organopolysiloxane (C1) ; et que des siloxanes cycliques de Formule (II) avec m = 2 et n = 0 contiennent au moins un motif de Formule (II) dans laquelle $R^3$ représente un radical fonctionnel réactif exempt d'un atome d'halogène et de phosphore ;
(C2) des polymères organiques thermoplastiques exempts de groupes esters cyanates ;
(C3) des esters cyanates monofonctionnels de Formule générale (III)

$$R^4\text{-OCN} \qquad \text{(III),}$$

dans laquelle $R^4$ représente un radical hydrocarboné aromatique monovalent, éventuellement substitué (par exemple également par des hétéroatomes), à la condition que le groupe ester cyanate soit directement lié à un atome de carbone aromatique ; et
(C4) des composés organiques monomères à fonctionnalité hydroxy et éventuellement propényle, qui ne contiennent pas d'autres groupes fonctionnels réactifs convenant à une réaction de polymérisation.

**7.** Composition réticulable selon la revendication 1, **caractérisée en ce qu'**elle contient en outre éventuellement (C) au moins un modifiant choisi dans le groupe (C1) à (C4),

(C) au moins un autre modifiant, différent de (C4),
(D) au moins une résine de maléimide polymérisable,
(E1) au moins une matière de charge renforcée par des fibres,
à la condition que soit présent au moins un composant (A), (C3) ou (C4) ayant des groupes propényle directement liés à des atomes de carbone aromatiques, et que les modifiants (C1) à (C4) sont :

(C1) des organopolysiloxanes contenant des motifs de Formule (II)

$$R^3_m(OR_4)_n SiO_{(4-m-n)/2} \qquad \text{(II)}$$

dans laquelle $R^3$ peut être identique ou différent et représente un atome d'hydrogène ou des radicaux hydrocarbonés monovalents ou divalents, liés à SiC, éventuellement substitués également par exemple par des hétéroatomes, $R^4$ peut être identique ou différent et représente un atome d'hydrogène ou des radicaux hydrocarbonés monovalents éventuellement substitués ayant 1 à 18 atomes de carbone, m représente 0, 1, 2 ou 3, de préférence 1, 2 ou 3, n représente 0, 1, 2 ou 3, de préférence 0, 1 ou 2, d'une manière particulièrement préférée 0 ou 1, en particulier 0, et à la condition que dans la Formule (II) la somme m + n soit < 3, m étant égal à 0 dans au plus 20 %, de préférence au plus 15 %, d'une manière particulièrement préférée au plus 10 %, en particulier au plus 5 % des motifs de Formule (II) ; dans au plus 1,0 %, de préférence au plus 0,5 %, d'une manière particulièrement préférée au plus 0,3 %, en particulier au plus 0,2 % des motifs de Formule (II), $R^4$ représente un atome d'hydrogène, dans chaque cas par rapport à tous les motifs siloxane de Formule (II) se trouvant dans l'organopolysiloxane (C1) ; et que des siloxanes cycliques de Formule (II), avec m = 2 et n = 0, contiennent au moins un motif de Formule (II) dans laquelle $R^3$ est un radical fonctionnel réactif exempt d'un atome d'halogène et de phosphore ;
(C2) des polymères organiques thermoplastiques exempts de groupes esters cyanates ;
(C3) des esters cyanates monofonctionnels de Formule générale (III)

$$R^4\text{-OCN} \qquad \text{(III) ,}$$

dans laquelle $R^4$ représente un radical hydrocarboné aromatique monovalent, éventuellement substitué (par exemple également par des hétéroatomes), à la condition que le groupe ester cyanate soit directement lié à un atome de carbone aromatique ; et
(C4) des composés organiques monomères à fonctionnalité hydroxy et éventuellement propényle, qui ne contiennent pas d'autres groupes fonctionnels réactifs convenant à la réaction de polymérisation.

**8.** Procédé de fabrication des compositions réticulables selon l'une des revendications 1 à 7, par mélange dans un ordre quelconque des différents composants.

**9.** Procédé de fabrication d'objet moulé par moulage de la composition réticulable selon l'une des revendications 1 à 7, puis durcissement.

10. Utilisation de compositions réticulables selon l'une des revendications 1 à 7 pour la fabrication d'objets moulés.

11. Objet moulé pouvant être obtenu par le procédé selon les revendications 8 ou 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Polym. Adv. Technol.,* 2020, vol. 31, 1245-1255
- *Polym. Int.,* 2011, vol. 60, 1277-1286
- *CHEMICAL ABSTRACTS,* 1129-88-0
- *CHEMICAL ABSTRACTS,* 1129-80-2
- *CHEMICAL ABSTRACTS,* 1156-51-0
- *CHEMICAL ABSTRACTS,* 32728-27-1
- *CHEMICAL ABSTRACTS,* 47073-92-7
- *CHEMICAL ABSTRACTS,* 101657-77-6
- *CHEMICAL ABSTRACTS,* 127667-44-1
- *CHEMICAL ABSTRACTS,* 14868-03-2
- *CHEMICAL ABSTRACTS,* 1219-14-3
- *CHEMICAL ABSTRACTS,* 135507-71-0
- *CHEMICAL ABSTRACTS,* 87397-54-4
- *CHEMICAL ABSTRACTS,* 153191-90-3
- *CHEMICAL ABSTRACTS,* 268734-03-8
- *CHEMICAL ABSTRACTS,* 30944-92-4
- *CHEMICAL ABSTRACTS,* 173452-35-2
- *CHEMICAL ABSTRACTS,* 113151-22-7
- *CHEMICAL ABSTRACTS,* 25722-66-1
- *CHEMICAL ABSTRACTS,* 546-56-5
- *CHEMICAL ABSTRACTS,* 512-63-0
- *CHEMICAL ABSTRACTS,* 77-63-4
- *CHEMICAL ABSTRACTS,* 546-45-2
- *CHEMICAL ABSTRACTS,* 1693-46-5
- *CHEMICAL ABSTRACTS,* 1693-47-6
- *CHEMICAL ABSTRACTS,* 121225-98-7
- *CHEMICAL ABSTRACTS,* 18724-32-8
- *CHEMICAL ABSTRACTS,* 257284-60-9
- *CHEMICAL ABSTRACTS,* 187333-74-0
- *CHEMICAL ABSTRACTS,* 5256-79-1
- *CHEMICAL ABSTRACTS,* 3390-61-2
- *CHEMICAL ABSTRACTS,* 1122-85-6
- *CHEMICAL ABSTRACTS,* 110215-65-1
- *CHEMICAL ABSTRACTS,* 26896-48-0
- *CHEMICAL ABSTRACTS,* 1745-89-7
- *CHEMICAL ABSTRACTS,* 1745-81-9
- *CHEMICAL ABSTRACTS,* 528-43-8
- *CHEMICAL ABSTRACTS,* 35354-74-6
- *CHEMICAL ABSTRACTS,* 41481-66-7
- *CHEMICAL ABSTRACTS,* 1675-54-3
- *CHEMICAL ABSTRACTS,* 2095-03-6
- *CHEMICAL ABSTRACTS,* 2851-82-3
- *CHEMICAL ABSTRACTS,* 101-90-6
- *CHEMICAL ABSTRACTS,* 129375-41-3
- *CHEMICAL ABSTRACTS,* 85954-11-6
- *CHEMICAL ABSTRACTS,* 3072-84-2
- *CHEMICAL ABSTRACTS,* 66072-38-6
- *CHEMICAL ABSTRACTS,* 7328-97-4
- *CHEMICAL ABSTRACTS,* 878-43-1
- *CHEMICAL ABSTRACTS,* 47758-37-2
- *CHEMICAL ABSTRACTS,* 27610-48-6
- *CHEMICAL ABSTRACTS,* 29690-82-2
- *CHEMICAL ABSTRACTS,* 9003-36-5
- *CHEMICAL ABSTRACTS,* 28064-14-4
- *CHEMICAL ABSTRACTS,* 158163-01-0
- *CHEMICAL ABSTRACTS,* 28906-96-9
- *CHEMICAL ABSTRACTS,* 68610-51-5
- *CHEMICAL ABSTRACTS,* 119345-05-0
- *CHEMICAL ABSTRACTS,* 7195-45-1
- *CHEMICAL ABSTRACTS,* 7195-44-0
- *CHEMICAL ABSTRACTS,* 7195-43-9
- *CHEMICAL ABSTRACTS,* 7237-83-4
- *CHEMICAL ABSTRACTS,* 7176-19-4
- *CHEMICAL ABSTRACTS,* 5026-74-4
- *CHEMICAL ABSTRACTS,* 28768-32-3
- *CHEMICAL ABSTRACTS,* 130728-76-6
- *CHEMICAL ABSTRACTS,* 71604-74-5
- *CHEMICAL ABSTRACTS,* 25036-25-3
- *CHEMICAL ABSTRACTS,* 40039-93-8
- *CHEMICAL ABSTRACTS,* 110839-13-9
- *CHEMICAL ABSTRACTS,* 7300-91-6
- *CHEMICAL ABSTRACTS,* 13676-54-5
- *CHEMICAL ABSTRACTS,* 6422-83-9
- *CHEMICAL ABSTRACTS,* 13118-04-2
- *CHEMICAL ABSTRACTS,* 3006-93-7
- *CHEMICAL ABSTRACTS,* 3278-31-7
- *CHEMICAL ABSTRACTS,* 26140-67-0
- *CHEMICAL ABSTRACTS,* 79922-55-7
- *CHEMICAL ABSTRACTS,* 13102-25-5
- *CHEMICAL ABSTRACTS,* 13676-53-4
- *CHEMICAL ABSTRACTS,* 3278-30-6
- *Reactive and Functional Polymers,* 2019, vol. 142, 159-182